# EUROPÄISCHE PATENTSCHRIFT

(11) **EP 3 766 342 B1**
(45) Veröffentlichungstag und Bekanntmachung des Hinweises auf die Patenterteilung: **26.04.2023**
(21) Anmeldenummer: 20186234.9
(22) Anmeldetag: 16.07.2020
(51) Int. Cl.: A01K 63/00, A01K 63/04

(54) **GEWÄSSERVORRICHTUNG, ZUR ANSIEDLUNG UND/ODER BEHERBERGUNG VON AMPHIBIEN**
WATER DEVICE, FOR THE COLONISATION AND/OR SHELTER OF AMPHIBIANS
DISPOSITIF D'EAU DESTINÉ À LA COLONISATION ET/OU L'HÉBERGEMENT D'AMPHIBIENS

(30) Priorität: 19.07.2019 DE 102019119647
(43) Veröffentlichungstag der Anmeldung: 20.01.2021
(73) Patentinhaber: Trautner, Jürgen, 72631 Aichtal (DE)
(72) Erfinder: Trautner, Jürgen, 72631 Aichtal (DE); Rall, Sebastian, 92224 Amberg (DE); Hermann, Gabriel, 71157 Hildrizhausen (DE)
(74) Vertreter: Hafner & Kohl PartmbB

(56) Entgegenhaltungen:
- DE-A1- 3 708 085
- FR-A1- 2 990 104
- JP-A- S58 133 808

## Beschreibung

Die aus DE3708085A1, JPS58133808A und FR2990104A1 bekannten Vorrichtungen weisen relativ steile Wände auf, was für die Ansiedlung von Amphibien nachteilig ist. Die Erfindung betrifft eine Gewässervorrichtung, zur Ansiedlung und/oder Beherbergung von Amphibien. Die Gewässervorrichtung soll es Amphibien ermöglichen die Gewässervorrichtung zumindest temporär zu bewohnen bzw. für Amphibien ein von diesen geeignetes und/oder bevorzugtes Habitat zu bilden, insbesondere zur Reproduktion.

Der Erfindung liegt die Aufgabe zugrunde, eine Gewässervorrichtung anzugeben, welche insbesondere im Hinblick auf eine einfache und schnelle sowie kostengünstige Herstellung und/oder einen wartungsarmen bzw. wirtschaftlichen Betrieb es ermöglicht, Amphibien in der Gewässervorrichtung anzusiedeln und/oder zu beherbergen bzw. für diese ein geeignetes und/oder bevorzugtes Habitat zu bilden, insbesondere zur Reproduktion.

Die Aufgabe wird durch eine Gewässervorrichtung zur Ansiedlung und/oder Beherbergung von Amphibien gemäß Anspruch 1 gelöst. Die hierzu abhängigen Ansprüche betreffen mögliche Ausführungsformen der Gewässervorrichtung.

Die Erfindung betrifft eine Gewässervorrichtung, zur Ansiedlung und/oder Beherbergung von Amphibien, umfassend (a) eine zur Aufnahme von Wasser eingerichtete und mit wenigstens einer Aufnahmewandung ein Aufnahmevolumen definierende Aufnahmewanne, (b) eine mit einer Ablauföffnung ausgebildete Ablaufeinrichtung, welche eingerichtet ist, über die Ablauföffnung in der Aufnahmewanne befindliches Wasser zumindest temporär, insbesondere überwiegend oder vollständig, zu einem Auslassort abzuleiten, (c) eine der Ablaufeinrichtung zugeordnete Schließeinrichtung, wobei die Schließeinrichtung wenigstens ein Schließmittel umfasst, welches zwischen einer die Ablaufeinrichtung verschließenden Verschlussstellung und einer die Ablaufeinrichtung freigebenden und das in der Aufnahmewanne befindliche Wasser zumindest teilweise, insbesondere vollständig, zu einem Auslassort abfließen lassende Freigabestellung verstellbar ist. Die Gewässervorrichtung kann beispielsweise ein Stillgewässer bzw. ein stehendes Gewässer sein, d. h. es ist ein Gewässer, in dem keine oder nur eine geringfügige Fließgeschwindkeit vorhanden ist. Die geringfügige Fließgeschwindigkeit kann aus einem nur geringfügigen Zulauf von Wasser in und entsprechend geringen Ablauf von Wasser aus dem Gewässer resultieren. Im Fall, dass die Gewässervorrichtung keinen Zulauf von Wasser, z. B. über eine Zulaufleitung, z. B. einem Wasser zuführenden Bach aufweist, ist es vorteilhaft, im Nahbereich, insbesondere unmittelbar an den Randbereich der Aufnahmewanne eine für Fahrzeuge, insbesondere für Nutzfahrzeuge, befahrbare Flächen vorzusehen. In diesem Fall kann es beispielsweise ermöglicht werden, durch ein mit einem Wassertank versehenen Fahrzeug nahe an die Gewässervorrichtung bzw. nahe an die Aufnahmewanne heranzufahren, um komfortabel eine Befüllung der Aufnahmewanne mit Wasser vorzunehmen.

Die Gewässervorrichtung kann z. B. als Amphibienlaichgewässer mit insbesondere dauerhaftem Pioniercharakter ausgestaltet sein, der dauerhafte Pioniercharakter lässt sich dabei durch das periodische Befüllen und Ablassen des in der Aufnahmewanne zu platzierenden Wassers erreichen.

Die Gewässervorrichtung kann zumindest abschnittsweise aus einem natürlichen Wasserbecken bestehen und/oder zumindest abschnittsweise, insbesondere vollständig, als künstliches Wasser aufnehmendes Becken bzw. Wanne ausgebildet sein.

Die Gewässervorrichtung ist auf die Bedürfnisse von Amphibien mit einer engen Gewässerbindung ausgebildet bzw. ausgelegt. Insbesondere kann die Gewässervorrichtung als Lebensraum (insbesondere zur Reproduktion) von Tiere der Gattungen Unken oder Kröten, insbesondere von Tieren, welche der Familie der Bombinatoridae und/oder der Bufonidae zugeordnet werden, dienen bzw. für die Lebensgewohnheiten diese Tierarten ausgelegt sein. Besonders bevorzugt kann die Gewässervorrichtung der Gelbbauchunke (Bombina variegata) oder der Wechselkröte (Bufo viridis) als Lebensraum, insbesondere zur Reproduktion, dienen. Die Ausgestaltung der Gewässervorrichtung, insbesondere die Ausbildung von Hohlräumen und Deckungen für die entsprechenden Zieltiere bzw. Zieltierarten, und/oder die Hinzufügung und das Ablassen von in der Aufnahmewanne der Gewässervorrichtung zu bevorratendem Wasser ist vorteilhafterweise auf die Lebensgewohnheiten und/oder auf die von den oben erwähnten Zieltieren bzw. Zieltierarten bevorzugten Lebensumstände abgestimmt. Bei einer Auslegung einer Gewässervorrichtung für eine Gelbbauchunke und/oder eine Wechselkröte ist zu berücksichtigen, dass diese Tiere hochspezialisierte Pionierlaicher sind. Die prädationsanfälligen Larven können sich nur in frisch entstandenen Rohbodentümpeln sowie in ephemeren, regelmäßig trockenfallenden Pioniergewässern erfolgreich entwickeln. Ferner ist eine Mindestbesonnung der Laichplatze von ca. 5 bis 6 Stunden pro Tag vorteilhaft.

Die Gewässervorrichtung weist eine Aufnahmewanne auf, in welcher Wasser aufnehmbar ist. Sofern hierin der Begriff Wasser verwendet wird, so ist damit allgemein eine Flüssigkeit gemeint, z. B. ein übliches in der Natur vorkommendes Wasser. Das heißt, dass das Wasser Verunreinigungen aufweisen kann. Allgemein ist in diesem Zusammenhang der Begriff Wasser hinsichtlich seiner die Bestandteile der Gewässervorrichtung beschreibenden Eigenschaft mit einer Flüssigkeit gleichzusetzen, d. h z. B., dass die Aufnahmewanne derart ausgestaltet ist, dass diese Wasser bzw. Flüssigkeit aufnehmen und halten kann, beispielsweise weist eine Aufnahmewand der Aufnahmewanne eine wasser- bzw. flüssigkeitsdichte Eigenschaft auf.

Die wenigstens eine Aufnahmewandung der Aufnahmewanne definiert ein Aufnahmevolumen zur Aufnahme von Wasser. Das Aufnahmevolumen kann hierbei ein Fassungsvermögen von 5 bis 1000 m³, bevorzugt von 10 bis 500 m³, besonders bevorzugt von 30 bis 350 m³, höchst bevorzugt von 100 bis 300 m³, Wasser umfassen.

Alternativ oder zusätzlich kann die Aufnahmewandung der Aufnahmewanne derart ausgebildet oder ausgestaltet sein, dass ein Aufnahmevolumen zur Aufnahme von Wasser ein Fassungsvermögen von maximal 500 m³, bevorzugt von maximal 400 m³, besonders bevorzugt von maximal 300 m³, höchst bevorzugt von maximal 280 m³, allerhöchst bevorzugt von maximal 250 m³, Wasser umfasst. Damit weist die Gewässervorrichtung eine Größe auf, welche für die Verwendung als Habitat für Amphibien, besonders bevorzugt für Pionieramphibien wie z. B. die Gelbbauchunke oder die Kreuzkörte, vorteilhaft ist. Schließlich wird mit den angegebenen Maximalmaßen des Fassungsvolumens der Gewässervorrichtung beispielsweise ein relativ kleines Bauwerk erzielt, das dennoch von Fahrzeugen temporär befahrbar ausgebildet sein kann, um die Wartungsarbeiten zu vereinfachen. Das Minimalmaß für das Fassungsvermögen der Aufnahmewanne kann beispielsweise 3 m³, bevorzugt 5 m³, besonders bevorzugt 10 m³, höchst bevorzugt 30 m³, betragen.

Die Ansiedlung der Amphibien wird durch einen barrierefreien Übertritt der Amphibien zwischen dem in der Gewässervorrichtung aufgenommenem Wasser bzw. der Aufnahmewanne und dem äußeren Rand und/oder der Umwelt der Gewässervorrichtung ermöglicht. Die Amphibien können damit aus eigener Kraft von außerhalb in die Gewässervorrichtung eindringen und von der Gewässervorrichtung nach außerhalb austreten. Hierbei kann die Barrierefreiheit des Übertritts der Gewässervorrichtung zu der Umgebung auf Amphibien, bevorzugt auf Pionieramphibien besonders bevorzugt auf Unken oder Kröten wie z. B. Gelbbauchunken oder Kreuzkröten, ausgestaltet bzw. eingerichtet sein. Mit anderen Worten ist die Beschaffenheit der Gewässervorrichtung und deren Übergang zu der die Gewässervorrichtung umgebenden Umwelt derart eingerichtet, dass die vorgenannten Amphibien aus eigener Kraft sich zwischen der Gewässervorrichtung und der Umwelt bewegen können.

Die Aufnahmewanne kann beispielsweise zumindest abschnittsweise, insbesondere vollständig, eine im Wesentlichen trichter- und/oder kegel- und/oder trichterstumpf- und/oder kegelstumpfförmige Form aufweisen. Der Randbereich der Aufnahmewanne kann einen nach außen hin abflachenden Randabschnitt aufweisen.

Über eine einer Ablaufeinrichtung zugeordnete Ablauföffnung kann in der Aufnahmewanne befindliches Wasser zu einem Auslassort abfließen. Der Auslassort kann hierbei beispielsweise beabstandet von der Ablauföffnung angeordnet oder ausgebildet sein. Beispielsweise kann der Abstand des Auslassorts zu der Ablauföffnung wenigstens die Hälfte der geringsten horizontalen Längenerstreckung der Aufnahmewanne betragen, vorzugsweise beträgt der Abstand der Ablauföffnung zu dem Auslassort mindestens die Hälfte der größten horizontalen Längenerstreckung der Aufnahmewanne. Der Auslassort kann z. B. außerhalb einer durch die Aufnahmewanne definierten Fläche liegen. Der Auslassort kann eine gute Versickerungseigenschaft aufweisen und/oder unmittelbar oder mittelbar in ein weiteres Gewässer münden. Hierbei kann der Auslassort über eine Kanalverbindung mit einem weiteren Gewässer, z. B. einem Bach, verbunden sein. Eine auslassortseitige Auslassöffnung kann mit einer Klappe oder anderen Mitteln zur Verhinderung eines Eintretens von Tieren, insbesondere von Fröschen, in die Ablaufleitung versehen sein.

Eine als Überlauf dienende zweite Ablauföffnung bzw. zweite Ablaufeinrichtung kann vorzugsweise von dem Randbereich der Aufnahmewanne beabstandet sein, d. h., dass sich die Ablauföffnung innerhalb des Aufnahmevolumens befindet und/oder erstreckt. Dies hat den Vorteil, dass diese Ablauföffnung durch das diese umgebende Wasser im Zustand der befüllten Aufnahmewanne vor Berührung durch Personen geschützt ist, da diese sich hierfür in das Wasser begeben müssten. Dabei kann es vorgesehen sein, dass die als Überlauf dienende Ablauföffnung einen Abstand zu dem Rand der Aufnahmewanne von mindestens einem Meter, vorzugsweise von mindestens zwei Meter, besonders bevorzugt von mindestens drei Metern aufweist. Alternativ oder zusätzlich kann die als Überlauf dienende Ablauföffnung innerhalb eines zentralen Bereichs der den bestimmungsgemäßen Wasserpegel bildenden Wasseroberfläche angeordnet sein. Der zentrale Bereich kann beispielsweise als die 25 % am zentralsten gelegene Fläche der gesamten Wasseroberfläche definiert werden.

Durch die Ablauföffnung kann ein in der Aufnahmewanne befindliches Wasser überwiegend, insbesondere vollständig, abfließen bzw. abgeleitet werden. Ein vollständiges Abfließen meint dabei, dass nach einem Abfließen kein oder kaum noch Wasser in der Aufnahmewanne vorliegt. Hierzu ist die Ablauföffnung derart positioniert und/oder ausgerichtet, dass ein möglichst vollständiges Ablaufen von in der Aufnahmewanne befindlichem Wasser ermöglicht wird, typischerweise ist die Ablauföffnung hierzu an dem tiefsten Punkt der Aufnahmewanne angeordnet, ferner kann beispielsweise zusätzlich die Aufnahmewanne ein zur Ablauföffnung hin abfallendes Gefälle bzw. Neigung aufweisen.

Die Ablauföffnung ist beispielsweise mit einer Leitungsverbindung, insbesondere einer Rohrleitungsverbindung, mit einer Auslassöffnung der Ablaufeinrichtung verbunden, wobei die Ablauföffnung an dem Auslassort mündet. Hierbei kann beispielsweise es vorgesehen sein, dass die Leitungsverbindung zumindest abschnittsweise, überwiegend oder vollständig unter dem Erdboden und insbesondere zumindest abschnittsweise, überwiegend oder vollständig unter der Aufnahmewandung angeordnet ist bzw. verläuft.

Der Ablaufeinrichtung ist eine wenigstens ein Schließmittel aufweisende Schließeinrichtung zugeordnet, wobei das Schießmittel zwischen einer Verschlussstellung und einer Freigabestellung verlagerbar bzw. verstellbar ist. Die Verstellbarkeit des wenigstens einen Schließmittels kann stufenlos erfolgen. Auch kann das Schließmittel beispielsweise eine Zwischenstellung, d. h. z. B. eine Teiloffenstellung, einnehmen.

Die Schließeinrichtung kann beispielsweise als Absperrorgan ausgebildet sein, insbesondere ist die Schließeinrichtung als Ventil und/oder Absperrschieber und/oder Absperrklappe und/oder Kugelhahn ausgebildet. Die Schließeinrichtung bzw. das Schließmittel kann an der oder im Bereich der Aufnahmeöffnung und/oder der Ablauföffnung angeordnet oder ausgebildet sein. Alternativ oder zusätzlich kann das Schließmittel von der Ablauföffnung und/oder von der Aufnahmeöffnung beabstandet, innerhalb des Verlaufs der Leitungsverbindung angeordnet oder ausgebildet sein. Die Schließeinrichtung kann ein, insbesondere elastisches und/oder aus Gummi ausgebildetes Dichtmittel umfassen, das eine einfache und wartungsarme Betätigung - auch nach längeren Ruhezeiten (Nichtbetätigungszeiten) - der Schließeinrichtung zuverlässig ermöglicht.

Es kann sich als vorteilhaft erweisen, wenn über die Ablauföffnung das in der Aufnahmewanne befindliche Wasser gänzlich ablaufen kann. So kann es vorgesehen sein, im Frühjahr, insbesondere im März oder April eine Befüllung der Gewässervorrichtung, z. B. durch Zuführung von Frischwasser, vorzunehmen. Hierbei ist das Schließmittel der Schließeinrichtung in der Verschlussstellung. Der genannte Zeitraum für die Befüllung ist passend, um beispielsweise der Gelbbauchunke und/oder der Wechselkröte einen geeigneten Lebensraum bzw. ein von ihr bevorzugtes Habitat vorzuhalten. Im Herbst und/oder Winter, insbesondere im September und/oder Oktober und/oder November, kann über die Ablaufeinrichtung ein, insbesondere vollständiges, Ablassen bzw. Ableiten des in der Aufnahmewanne befindlichen Wassers erfolgen. Zu diesem Zeitpunkt ist dieser Lebensraum für Unken und/oder bestimmte Kröten, insbesondere für Gelbbauchunke und Wechselkröte, nicht mehr von Interesse. Diese hat sich zu diesem Zeitpunkt in deren Winterlager zurückgezogen, wobei sich die Unken und/oder Kröten hierzu im Erdreich vergraben oder in vorhandene Höhlungen zurückziehen.

Im darauffolgenden Frühjahr kann die Aufnahmewanne wieder erneut mit Wasser, insbesondere Frischwasser, befüllt werden, um den Tieren, insbesondere den Unken und/oder der Wechselkröte, erneut einen Lebensraum für die Fortpflanzung zu bieten. Dies wird dadurch begünstigt, dass die Gelbbauchunke und/oder Wechselkröte abhängig von einer Auen- oder sonstigen Dynamik immer wieder neu entstehende, temporäre Kleingewässer bzw. Gewässer besiedelt, so dass ein erneut befüllte Aufnahmewanne einen für die Gelbbauchunke und/oder die Wechselkröte attraktiven Lebensraum darstellen kann.

Durch das Ablassen bzw. Ableiten des Wassers wird es ermöglicht, etwaigen konkurrierenden Arten und/oder Fressfeinden der für die Gewässervorrichtung vorgesehenen Zieltieren bzw. Zieltierart (insbesondere der Unken, besonders bevorzugt Gelbbauchunken, und der Wechselkröte) die Attraktivität der Gewässervorrichtung zu entziehen. Beispielsweise wird durch das, insbesondere vollständige, Ablassen von Wasser aus der Aufnahmewanne ein Verweilen (z. B. Überwintern) von Fressfeinden (z. B. Rückenschwimmern, Ruderwanzen, Großlibellenlarven, Molchen) der Unken, insbesondere der Gelbbauchunke, oder der Wechselkröte, an der Gewässervorrichtung verhindert, so dass bei einer erneuten Befüllung der Gewässervorrichtung mit Wasser keine oder kaum Fressfeinde der Zieltiere bzw. Zieltierarten an der Gewässervorrichtung vorzufinden sind und damit ein Lebensraum für eine erfolgreiche Fortpflanzung der Zieltiere bzw. der Zieltierarten, insbesondere der Gelbbauchunke und/oder der Wechselkröte, vorgehalten werden kann.

In einer bevorzugten Ausführungsform ist es vorgesehen, dass die Gewässervorrichtung wenigstens eine erste Ablaufeinrichtung mit einer ersten Ablauföffnung und wenigstens eine zweite Ablaufeinrichtung mit einer zweiten Ablauföffnung umfasst, wobei über die Ablauföffnungen (erste und zweite Ablauföffnung) Wasser aus der Aufnahmewanne zumindest temporär zu wenigstens einem Auslassort ableitbar ist und die erste und die zweite Ablauföffnung zueinander einen Abstand aufweisen, insbesondere beträgt der Abstand der ersten und zweiten Ablauföffnung mindestens ein Viertel, bevorzugt mindestens die Hälfte, besonders bevorzugt mindestens Dreiviertel der maximalen Wasserhöhe von einem tiefsten Punkt des Aufnahmevolumens zu einem die Höhe der Aufnahmewanne betreffenden Referenzwert, insbesondere einem, durch den Überlauf definierten bestimmungsgemäßen (maximalen) Wasserpegel des Aufnahmevolumens bzw. der Aufnahmewanne. Durch das Vorsehen zweier unterschiedlicher Ablaufeinrichtungen kann den jeweiligen Ablaufeinrichtungen durch deren sich unterscheidende Ausgestaltung und/oder Anordnung und/oder Ausrichtung unterschiedliche Funktionen für den Betrieb der Gewässervorrichtung zuteil bzw. zugeordnet werden.

Beispielsweise lässt sich durch die Anordnung einer ersten Ablauföffnung in einem bodennahen Bereich und durch die Anordnung der zweiten Ablauföffnung in einem vom Boden beabstandeten Bereich erreichen, dass über die erste Ablauföffnung im Falle der Freigabe bzw. des Öffnens der ersten Ablaufeinrichtung das Wasser in der Aufnahmewanne gänzlich oder überwiegend abgelassen werden kann. Die zweite, vom Boden beabstandete Ablauföffnung kann beispielsweise als Überlauf dienen, d. h. Wasser, das sich über dem Höhenniveau der zweiten Ablauföffnung befindet kann durch die zweite Ablauföffnung und die zweite Ablaufeinrichtung zum Auslassort abgeleitet werden. Hierzu ist es vorteilhaft, wenn die zweite Ablaufeinrichtung stets Freigängig für ein Durchfließen von Wasser ausgebildet ist und deshalb kein Absperrorgan umfasst.

Der Referenzwert kann beispielsweise das Höhenniveau des Randbereichs der Aufnahmewanne bzw. der Gewässervorrichtung sein. Dieses Höhenniveau des Randbereichs ist beispielsweise dadurch definiert, dass bis dorthin das in der Aufnahmewanne befindliche Wasser, in dem Fall, dass kein anderweitiger Überlauf vorgesehen ist, ansteigen kann, bevor das Wasser über den Randbereich tritt und in benachbarte Flächen abfließt. Der Überlauf, insbesondere eine als Überlauf dienende zweite Aufnahmeöffnung ist unterhalb des Höhenniveaus des Randbereichs, beispielsweise mindestens einen Zentimeter, bevorzugt mindestens drei Zentimeter, besonders bevorzugt mindestens 5 Zentimeter unterhalb des Höhenniveaus des Randbereichs angeordnet oder ausgebildet. Der bestimmungsgemäße Wasserpegel des Aufnahmevolumens der Gewässervorrichtung kann beispielsweise durch den Überlauf und damit z. B. durch die zweite Ablauföffnung der zweiten Ablaufeinrichtung bestimmt bzw. definiert werden. Je nach der für den Überlauf, insbesondere der für die zweite Ablauföffnung, gewählten Höhe kann der maximale Wasserpegel der Gewässervorrichtung eingestellt werden. Damit wird es erreicht, dass selbst im Fall von durch Regen zufließendem Wasser, eine vordefinierte Gewässertiefe bzw. Wasserpegelhöhe in der Aufnahmewanne nicht überschritten wird.

Durch über den Randbereich der Gewässervorrichtung tretendendes Wasser kann die Gefahr ausgehen, dass dieses Wasser zumindest abschnittsweise "unter" die Aufnahmewanne, insbesondere unter die Aufnahmewand der Aufnahmewanne, gelangt und dort bei Temperaturen unterhalb des Nullpunkts zu Frostschäden führen kann. Damit dient der Überlauf auch einem Frostschutz und trägt folglich zu einer sich über einen langen Zeitraum ergebenden Nutzbarkeit der Gewässervorrichtung bei. Insbesondere im Fall einer zumindest teilweise Asphaltmaterial aufweisenden Aufnahmewanne bzw. Aufnahmewandung zwischen das Erdreich und der Aufnahmewanne bzw. der Aufnahmewandung gelangendes Wasser zu Beschädigungen führen.

In einer bevorzugten Ausführungsform sind eine zweite Ablaufeinrichtung als Überlauf und eine erste Ablaufeinrichtung als Grundablass vorgesehen, wobei die oberhalb der Aufnahmewanne befindlichen Bestandteile der beiden Ablaufeinrichtungen einen Abstand zueinander im Bereich der Aufnahmewandung von mindestens einem Meter aufweisen können. Dies ermöglicht das Hindurchführen von einem Verdichtungsgerät zur verdichteten Ausbildung der zwischen den beiden Aufnahmeeinrichtungen befindlichen Aufnahmewandung.

Es ist möglich, dass eine erste Ablaufeinrichtung, insbesondere eine als Grundablasseinrichtung ausgebildete erste Ablaufeinrichtung, derart eingerichtet ist, dass über diese in der Aufnahmewanne befindliches Wasser zumindest temporär, insbesondere überwiegend oder vollständig, zu einem Auslassort ableitbar ist, wobei über die der ersten Ablaufeinrichtung zugeordneten Schließeinrichtung das Abfließen des Wassers über die erste Ablaufeinrichtung zumindest temporär sperrbar bzw. freigebbar ist. Damit kann durch Öffnen der Schließeinrichtung bzw. durch Bewegen eines Schließmittels der Schließeinrichtung in eine Freigabestellung ein nahezu vollständiges oder vollständiges Ablassen bzw. Ableiten von Wasser aus der Aufnahmewanne erreicht werden. Wenn die erste Ablauföffnung der ersten Ablaufeinrichtung bzw. die Grundablasseinrichtung optional in einem unteren Drittel, bevorzugt in einem unteren Viertel, der maximalen Wasserhöhe von einem tiefsten Punkt des Aufnahmevolumens zu einem die Höhe der Aufnahmewanne betreffenden Referenzwert, insbesondere einem bestimmungsgemäßen Wasserpegel der Aufnahmewanne, angeordnet oder ausgebildet ist. Bevorzugt kann die erste Ablauföffnung der Ablaufeinrichtung in einem Bodenbereich der Aufnahmewanne, höchst bevorzugt an einem tiefsten Punkt der Aufnahmewanne angeordnet oder ausgebildet sein. Die Ablauföffnung kann beispielsweise in einer Aufnahmewandung und/oder bündig mit einer Aufnahmewandung angeordnet oder ausgebildet sein.

Es ist möglich, dass wenigstens eine Ablaufeinrichtung, insbesondere die erste Ablaufeinrichtung, einen einen durch Behälterwandungen begrenzenden Behälterkörperinnenraum definierenden Behälterkörper umfasst, wobei insbesondere der Behälterkörper im Endmontagezustand eine zum Aufnahmevolumen der Aufnahmewanne ausgerichtete erste Behälteröffnung aufweist und/oder eine zweite Behälteröffnung aufweist, durch welche in dem Behälterkörperinnenraum befindliches Wasser zu einem Auslassort ableitbar ist. Der Behälterkörper kann beispielsweise steif ausgebildet sein, insbesondere kann der Behälterkörper aus Stahl oder Aluminium gefertigt sein. Der Behälterkörper kann als Montagebaugruppe ausgebildet sein, welche im Endmontagezustand in die Aufnahmewanne eingebaut wird, insbesondere wird der Behälterkörper derart relativ zu der Aufnahmewanne eingebaut, dass im Endmontagezustand ein bündiger Übergang zwischen dem Behälterkörper, insbesondere einer dem Aufnahmevolumen zugewandten Behälteröffnung des Behälterkörpers mit einer dem Aufnahmevolumen zugewandten Oberfläche der Aufnahmewanne vorliegt. Der Behälterkörper kann z. B. zwei Behälteröffnungen aufweisen, wobei eine erste, insbesondere größere, Behälteröffnung dem Aufnahmevolumen der Aufnahmewanne zugewandt ist und eine zweite, insbesondere kleinere, Behälteröffnung dem Auslassort bzw. der zum Auslassort führenden Ablaufleitung zugewandt ist. Mit anderen Worten ermöglicht der Behälterkörper eine einfache und zumindest zum Teil vorkonfektionierte bzw. vormontierte zu montierende Schnittstelle zu angrenzenden Bauteilen, beispielsweise der zum Auslassort führenden Ablaufleitung. Der Behälterkörper kann eine quaderartige Form aufweisen, vorzugsweise sind mehrere das Behältervolumen definierende Behälterwände stoff- und/oder formschlüssig miteinander verbunden, z. B. zusammengeschweißt. Der Behälterkörper ist vorzugsweise flüssigkeitsdicht ausgebildet, so dass ein in dem Aufnahmevolumen befindliches Wasser über die erste Behälteröffnung in das Behältervolumen und von dem Behältervolumen über die zweite Behälteröffnung und einer sich an die zweite Behälteröffnung anschließende Ablaufleitung zum Auslassort gelangt. Der Behälterkörper kann beispielsweise Aufnahmemittel und/oder Dichtungsmittel zur Fixierung bzw. Abdichtung und/oder Montage von weiteren Bauteilen umfassen.

Es kann vorgesehen sein, dass in oder an dem Behälterkörper zumindest abschnittsweise ein Fangbehälter, insbesondere ein als Schlammfangbehälter ausgebildeter Fangbehälter, angeordnet oder anordenbar ist. Dieser Fangbehälter ist eingerichtet, ein in einem durch Fangbehälterwandungen definierten Fangbehälterinnenraum befindliche Wasser zu dem Auslassort abzuleiten, wobei Fangstoffe in dem Fangbehälterinnenraum zurückgehalten werden. Typischerweise ist der Fangbehälter derart ausgelegt, dass Schlamm oder andere, insbesondere schwere, Schwebstoffe in dem Fangbehälterinnenraum zurückgehalten werden. Hierbei kann ein Zurückhalten durch ein Absetzen der Fangstoffe und/oder durch an die Dimensionierung und/oder Geometrie der Fangstoffe angepasste Öffnungen bzw. eine entsprechende Gitterstruktur erreicht werden. Beispielsweise ist der Fangbehälter als Schlammfangbehälter ausgebildet, wobei wenigstens eine, insbesondere mehrere, Überlauföffnung(en) an den Fangbehälterinnenraum definierenden Fangbehälterwandungen angeordnet oder ausgebildet ist bzw. sind. Über die wenigstens eine Überlauföffnung, kann in dem Fangbehälterinnenraum befindliches Wasser in einen zur Auslassöffnung führenden Bereich übertreten und in ein unterhalb und/oder seitlich des Fangbehälters liegendes Volumen oder Teilvolumen (Zwischenraum) des Behälterkörperinnenraums gelangen. Von dort kann das Wasser über die zweite Behälteröffnung zu einem Auslassort abfließen. Die in dem Wasser befindlichen Schwebstoffe können sich dabei in dem Bodenbereich des Fangbehälterinnenraums bzw. dem unterhalb der Überlauföffnungen befindlichen Fangbehälterteilvolumen als z. B. Schlamm oder Schluff absetzen. Mit anderen Worten wird durch den Fangbehälter für das über die erste Ablaufeinrichtung von dem Aufnahmevolumen der Aufnahmewanne zu einem Ablaufort abgeführte Wasser ein Entfernen von Schwebstoffen durch Absetzen bzw. durch Sedimentation erreicht.

Der Fangbehälter ist beispielsweise lösbar in oder an dem Behälterkörper verbunden. Vorzugsweise weist der Fangbehälter Angriffsbereiche auf, durch welche eine erleichterte manuelle oder werkzeuggebundene Entnahme des Fangbehälters aus dem Behälterkörper ermöglicht wird. Z. B. sind Eingriffsösen und/oder -ausnehmungen zum Eingriff für ein Greifwerkzeug an dem Fangbehälter derart angeordnet oder ausgebildet, so dass diese im fangbehältereingesetzten Zustand des Fangbehälters in dem Behälterkörper der Fangbehälter aus dem Behälterkörper entnehmbar ist.

In einer weiteren vorteilhaften Ausführungsform ist in oder an, insbesondere auf, dem Behälterkörper zumindest temporär ein wasserdurchlässiges Deckelelement zumindest temporär anordenbar, bevorzugt ist das Deckelelement gitterartig ausgebildet. Ein gitterartig ausgebildetes Deckelelement kann Gitteröffnungen aufweisen, die derart gewählt bzw. dimensioniert sind, dass für eine Person keine Verletzungsgefahr (z. B. Stolpern) besteht und der Person einen sicheren Tritt auf dem Deckelement ermöglicht. Bevorzugt sind die Öffnungen des eines gitterartigen Deckelements derart dimensioniert und/oder geformt, dass ein Hindurchtreten von Tieren, insbesondere von Unken und/oder der Wechselkröte, in beide Richtung ermöglicht wird, d. h., dass selbst ausgewachsene Unken oder Wechselkröten die Öffnungen passieren können. Beispielsweise kann das Deckelelement mit Öffnungen versehen sein, die jeweils eine Fläche von mindestens 150 mm² aufweisen, wobei eine maximale Erstreckung der Öffnung beispielsweise mindestens 45 mm beträgt.

Das Deckelelement kann vorzugsweise lösbar in oder an einem behälterkörperseitigen Deckelaufnahmebereich angeordnet oder anordenbar sein, hierzu kann der Behälterkörper beispielsweise einen zumindest abschnittsweise an seiner Innenseite umlaufenden und in den Behälterinnenraum gerichteten Auflagekragen umfassen.

Es ist möglich, dass eine Ablauföffnung einer Ablaufeinrichtung, insbesondere die zweite Ablauföffnung der zweiten Ablaufeinrichtung, in einer oberen Hälfte, bevorzugt in einem oberen Drittel, besonders bevorzugt in einem oberen Viertel, höchst bevorzugt in einem oberen Sechstel, der Höhe des tiefsten Punktes der Aufnahmewanne zu einem Randbereich der Aufnahmewanne und/oder auf Höhe eines bestimmungsgemäßen Wasserpegels des Aufnahmevolumens angeordnet oder ausgebildet ist. Damit wird es erreicht, dass die zweite Ablauföffnung als Überlauf eingesetzt werden kann und sich die maximale Höhe des Wasserpegels der Höhe bzw. dem Höhenniveau der zweiten Ablauföffnung entspricht. Die erste und zweite Ablaufeinrichtung können unterschiedliche Funktionen erfüllen, so kann beispielsweise die erste Ablasseinrichtung ein gänzliches Ablassens des in der Aufnahmewanne befindlichen Wassers und die zweite Ablaufeinrichtung die Funktion des Verhinderns von über die Randbereiche der Aufnahmewanne sonst übertretenden Wassers erfüllen.

Es kann sich als vorteilhaft erweisen, wenn eine Ablaufeinrichtung, insbesondere die zweite Ablauföffnung, höhenverlagerbar, bevorzugt höhenverlagerbar relativ zu einem Bodenbereich der Aufnahmewanne, ausgebildet ist, besonders bevorzugt ist die Ablauföffnung stufenlos in deren Höhe (relativ) zu einem Bodenbereich der Aufnahmewanne anordenbar bzw. arretierbar. Dadurch, dass die zweite Ablauföffnung z. B. durch einen Teleskopmechanismus der zweiten Ablaufeinrichtung in dessen Höhe einstellbar ist, kann auf einfache und komfortable Weise der maximale Wasserpegel bzw. der bestimmungsgemäße maximale Wasserpegel an der Gewässervorrichtung eingestellt werden. Auch wird es hiermit ermöglicht, eine bereits verbaute Ablaufeinrichtung in deren Höhenniveau der zweiten Ablauföffnung nachträglich auf einfache und komfortable Weise zu verändern. Die Funktion der Höhenverlagerbarkeit der Ablauföffnung kann durch einen kraft- und/oder formschlüssigen Mechanismus zu deren Arretierung und/oder Freigabe erfolgen, z. B. durch einen arretierbaren Teleskopmechanismus. Der Mechanismus ist vorzugsweise manuell, d. h. von Hand, und/oder werkzeuggestützt arretierbar bzw. freigebbar. Damit wird es einer Person ermöglicht auf einfache und komfortable Weise die Höhe der zweiten Ablauföffnung zu verändern. Alternativ oder zusätzlich kann es vorgesehen sein, dass die mit der Ablauföffnung versehene zweite Ablaufeinrichtung aus mehreren, wahlweise miteinander verbindbaren, insbesondere unterschiedliche Längen aufweisenden, Ablaufleitungsabschnitten ausgebildet ist, welche in unterschiedlichen Konfigurationen zur Erreichung einer Zielhöhe der zweiten Ablauföffnung verbindbar sind.

Es ist möglich, dass eine Ablaufeinrichtung, insbesondere die zweite Ablaufeinrichtung, ein, bevorzugt innerhalb des Aufnahmevolumens angeordnetes oder ausgebildetes, Kupplungsmittel zur lösbaren Befestigung eines ersten Ablaufeinrichtungsabschnitts an einem weiteren Ablaufeinrichtungsabschnitt umfasst. Durch das Kupplungsmittel wird es ermöglicht auf einfache und komfortable Weise einen ersten Ablaufeinrichtungsabschnitt von einem weiteren Ablaufeinrichtungsabschnitt zu trennen und wieder zu verbinden. Hierbei kann das Kupplungsmittel eine kraft- und/oder formschlüssige Verbindung zweier Kupplungselemente des Kupplungsmittels umfassen. Das Kupplungsmittel ist vorzugsweise innerhalb des Aufnahmevolumens der Aufnahmewanne angeordnet oder ausgebildet. Auch kann das Kupplungsmittel vorzugsweise auf einem höheren Höhenniveau angeordnet sein, als eine erste Ablauföffnung einer ersten Ablaufeinrichtung, insbesondere als eine erste Ablaufeinrichtung einer als Grundablass wirkenden ersten Ablaufeinrichtung. In diesem Fall wird es ermöglicht, durch Ablassen des in der Aufnahmewanne befindlichen Wassers über die erste Ablaufeinrichtung das Kupplungsmittel von dem Wasser freizulegen bzw. "trockenzulegen".

Das Verbinden und/oder Lösen der Kupplungselemente des Kupplungsmittels kann vorzugsweise zumindest teilweise, insbesondere ausschließlich, durch eine Drehbewegung erfolgen. Beispielsweise weist das Kupplungsmittel ein erstes und ein zweites Kupplungselement auf, die korrespondierende Formen aufweisen und ineinandergreifen können, z. B. nach Art einer Klauenkupplung. Das der Aufnahmewandung zugewandte Kupplungselement kann im entkuppelten Zustand mit einem Deckel versehen werden. Der Deckel kann beispielsweise verliersicher an dem der Aufnahmewandung zugewandten Kupplungselement befestigt bzw. beweglich gelagert sein. Auch kann der Deckel in eine Schließstellung vorgespannt an dem der Aufnahmewandung zugewandten Kupplungselement befestigt bzw. gelagert sein.

Die zweite Ablaufeinrichtung kann einen Krümmer zur Umlenkung einer im Wesentlichen vertikal verlaufenden Ablaufleitung zu einer hierzu stromab angeordneten im Wesentlichen bzw. unter leichtem Gefälle horizontal verlaufenden Ablaufleitung aufweisen. Die horizontale und/oder die vertikale Ablaufleitung kann im Wesentlichen eine geradlinige Form aufweisen. Der Krümmer kann beispielsweise derart ausgebildet bzw. angeordnet sein, dass er unterhalb der Aufnahmewanne im Boden verankert ist und eine ausreichende Stützfunktion für die in oder an der vertikal verlaufenden Ablaufleitung angeordneten Elemente (z. B. Kupplungsmittel, Schutzmittel) aufweist. Beispielsweise ist der Krümmer als Muffenfußkrümmer ausgebildet.

Es ist möglich, dass zumindest abschnittsweise über einen gemeinsamen Ablaufleitungsabschnitt Wasser aus dem Aufnahmevolumen der Aufnahmewanne über die erste und die zweite Ablaufeinrichtung zu einem Auslassort ableitbar ist, insbesondere ist der gemeinsame Ablaufleitungsabschnitt stromab einer Schließeinrichtung, insbesondere stromab einer der ersten Ablaufeinrichtung zugeordneten Schließeinrichtung, angeordnet oder ausgebildet. Das Ableiten von Wasser über die erste und zweite Ablaufeinrichtung kann zeitgleich oder zeitlich versetzt über den gemeinsamen Ablaufleitungsabschnitt erfolgen. Dadurch, dass die Schließeinrichtung der ersten Ablaufeinrichtung stromauf einer Zuleitungsstelle der zweiten Ablaufeinrichtung zum gemeinsamen Ablaufleitungsabschnitt liegt, kann ein Ableiten von Wasser über die zweite Ablaufeinrichtung unabhängig von dem Schaltzustand (Verschlussstellung oder Freigabestellung) der Schließeinrichtung erfolgen. Damit ist sichergestellt, dass stets ein Ableiten von Wasser durch eine als Überlauf dienende zweite Ablaufeinrichtung gewährleistet wird. Der gemeinsame Ablaufleitungsabschnitt kann beispielsweise zumindest abschnittsweise, insbesondere vollständig, unterhalb einer Erdoberfläche bzw. unterirdisch, insbesondere zumindest abschnittsweise, insbesondere vollständig, unterhalb der Aufnahmewanne verlaufen.

In einer vorteilhaften Ausführungsform kann es beispielsweise vorgesehen sein, dass eine Ablauföffnung der Ablaufeinrichtung, insbesondere die zweite Ablauföffnung der zweiten Ablaufeinrichtung, durch ein wasserdurchlässiges Schutzmittel derart verschlossen ist, dass Fremdstoff, insbesondere Blätter oder ähnliches, durch die Ablauföffnung nicht hindurchtreten können. Das Schutzmittel kann beispielsweise ein Gitter aufweisen, das feste Fremdstoffe ab einer definierten Mindestgröße vor einem Hindurchtreten abhält. Zum Beispiel kann das Schutzmittel derart ausgebildet sein, dass Blätter und/oder Kleintiere nicht durch die Ablauföffnung hindurchtreten können. Hierzu kann das Schutzmittel eine Trennwand aufweisen, welche die Umwelt zu dem Innenraum des Schutzmittels abtrennt, wobei die Trennwand beispielsweise ein Lochblech umfassen kann, dessen maximaler Lochdurchmesser 4 mm, bevorzugt 3,5 mm, besonders bevorzugt 2,5 mm, beträgt. Der minimale Lochdurchmesser kann beispielsweise 0,5 mm betragen. Das Schutzmittel kann optional lösbar, insbesondere kraft- und/oder formschlüssig, an der ersten Ablaufeinrichtung befestigt bzw. verbunden sein. Zum Beispiel ist das Schutzmittel über eine Schraubverbindung mit der Ablaufeinrichtung bzw. mit einem einen aufnahmevolumenseitigen Endbereich bildenden Ablaufeinrichtungsabschnitt der Ablaufeinrichtung verbunden.

Das Schutzmittel kann beispielsweise einen einen Innenraum definierenden Schutzkörper umfassen, wobei der Schutzkörper z. B. eine zylindrische oder zylinderartige Form aufweisen kann, wobei die Mantelfläche eine mit Ausnehmungen versehene Trennwand bzw. eine Wasserdurchtrittsfläche ausbilden kann. Vorzugsweise ist der Schutzkörper derart steif und/oder fest ausgebildet, dass dieser eine Widerstandsfähigkeit gegen Vandalismus, z. B. gegen Steinschlag bzw. Steinwurf aufweist.

Es ist möglich, dass ein Greifelement zwischen dem Kupplungsmittel und dem freien, stromauf des Kupplungsmittels befindlichen Ende der Ablaufeinrichtung angeordnet oder ausgebildet ist. Das Greifelement kann dazu dienen manuell oder mittels eines Werkzeugs ein Drehmoment auf den stromauf des Kupplungsmittels befindlichen Ablaufeinrichtungsabschnitt einzubringen und damit auch ein Drehmoment auf das Kupplungsmittel anzulegen, um das Kupplungsmittel zu öffnen oder zu schließen. Hierzu kann es beispielsweise vorgesehen sein, dass das Greifelement in einer Höhe von 0,30 m bis 1,80 m, bevorzugt in einer Höhe von 0,5 m bis 1,50 m, besonders bevorzugt in einer Höhe von 0,80 m bis 1,30 m über einer die zweite Ablaufeinrichtung durch die Aufnahmewanne hindurchführenden Bodenbereich angeordnet oder ausgebildet. Damit liegt das Greifelement in einem ergonomisch gut hantierbaren Bereich für eine in der Ablaufwanne stehende Person. Das Greifelement kann beispielsweise senkrecht und radial abstehend zu einem rohrartigen Abschnitt eines über das Kupplungsmittel lösbaren Ablaufeinrichtungsabschnitt angeordnet oder ausgebildet sein.

Die Schließeinrichtung, insbesondere eine der zweiten Ablaufeinrichtung zugeordnete Schließeinrichtung, kann beispielsweise zwischen einem Auslassort und der Ablauföffnung, insbesondere zwischen dem Auslassort und der zweiten Ablauföffnung, angeordnet oder ausgebildet sein. Hierbei kann insbesondere ein Schließmittel der Schließeinrichtung in einem unterhalb einer Erdoberfläche platzierten, insbesondere unterhalb einer Aufnahmewanne platzierten, ablaufeinrichtungsseitigen Leitungsabschnitt angeordnet oder ausgebildet sein. Bevorzugt ist das Schließmittel vermittels eines Steuer- und/oder Regelungsmittels zwischen einer Verschlussstellung und einer Freigabestellung verstellbar. Das Steuer- und/oder Regelungsmittel kann beispielsweise zumindest abschnittsweise, insbesondere vollständig, als mechanische Verbindung ausgebildet sein, z. B. als Gestänge, insbesondere als Schub- und/oder Zuggestänge). Alternativ oder zusätzlich kann das Steuer- und/oder Regelungsmittel zumindest abschnittsweise, insbesondere vollständig, als flexible Welle ausgebildet sein. Allgemein kann von dem Steuer- und/oder Regelungsmittel eine rotatorische und/oder translatorische Bewegung ausgehend von einer Handhabe zu dem Schließmittel übertragen werden, um das Verschlussmittel in eine Verschlussstellung und/oder in eine Freigabestellung zu bewegen.

Es kann ein Handhabungsmittel zur manuellen oder werkzeuggestützten Betätigung des Steuerungs- und/oder Regelungsmittels im Bereich eines zumindest temporär frei zugänglichen Handhabungsbereichs angeordnet oder ausgebildet sein, insbesondere ist der Handhabungsbereich zumindest temporär durch eine Handhabungsbereichsabdeckung zur Umwelt hin abdeckbar bzw. gasdicht und/oder flüssigkeitsdicht und/oder schmutzdicht abschließbar. Damit ist das in einem Handhabungsbereichsvolumen eines Handhabungsbereichs angeordnete Handhabungsmittel durch Abdecken des Handhabungsbereichs bzw. des Handhabungsbereichsvolumens vermittels der Handhabungsbereichsabdeckung vor Witterungseinflüssen und/oder Schutz geschützt. Alternativ oder zusätzlich kann die Handhabungsbereichsabdeckung, insbesondere über ein Schloss, abschließbar das Handhabungsbereichsvolumen zur Umwelt hin abschließen. Damit kann eine ungewollte Manipulation bzw. Betätigung des Handhabungsmittels und damit des Verschlussmittels durch unberechtigte Dritte verhindert werden.

Es kann sich als vorteilhaft erweisen, wenn eine zumindest temporär Wasser aus einem Wannenaufnahmevolumenmontagebereich zu einem Ablaufort ableitende dritte Ablauföffnung einer dritten Ablaufeinrichtung vorgesehen ist, wobei die dritte Ablauföffnung in einem tieferen Höhenniveau als die erste und die zweite Ablauföffnung angeordnet oder ausgebildet ist. Die dritte Ablauföffnung kann beispielsweise im Endmontagezustand durch einen Aufnahmewannenabschnitt zumindest abschnittsweise oder vollständig überdeckt sein. Die dritte Ablauföffnung bildet somit eine Montageablauföffnung bzw. einen Bauzeitentwässerungsabgang, welche bzw. welcher eine Entwässerung der Baugrube bzw. der im Bau befindlichen Aufnahmewanne sicherstellt, so dass während eines z. B. schichtartigen Aufbaus der Aufnahmewanne etwaiges für den Aufbauprozess im Wannenbereich unerwünschtes Wasser zuverlässig abgeführt wird. Da nach der Fertigstellung der Aufnahmewanne bzw. während des bestimmungsgemäßen Gebrauchs der Gewässervorrichtung und insbesondere der Aufnahmewanne, die dritte Ablauföffnung obsolet geworden ist, kann diese beispielsweise zumindest während des Auftrags einer, insbesondere der letzten, Materialschicht zur Ausbildung der Aufnahmewanne überdeckt bzw. überbaut werden. Hierzu kann die dritte Ablauföffnung vor dem Materialauftrag und damit vor der Überdeckung der dritten Ablauföffnung durch einen Verschlussstopfen und einem optionalen Dichtmittel, beispielsweise einem Dichtring, verschlossen werden. Es kann weiter optional vorgesehen sein, dass die dritte Ablauföffnung der dritten Ablaufeinrichtung einen gemeinsamen Ablaufleitungsabschnitt mit der ersten und/oder der zweiten Ablaufleitung aufweist, vorzugsweise schließt die dritte Ablaufleitung stromauf eines Zulaufpunkts einer weiteren Ablaufleitung an eine erste und/oder zweite Ablaufleitung an.

Die Aufnahmewanne kann zumindest abschnittsweise, insbesondere vollflächig, einen schichtartigen Aufbau aufweisen, wobei wenigstens eine erste Schicht aus einem Gussasphalt gebildet ist, insbesondere weist der Gussasphalt einen thermoplastischen Materialbestandteil und/oder einen Anteil an Bitumen von 2 bis 40 Masse-%, bevorzugt von 3 bis 30 Masse-%, besonders bevorzugt von 4 bis 20 Masse-% auf. Als Gussasphalt kann im vorliegenden Sinne auch eine Asphaltmastix verstanden werden. Damit meint Gussasphalt eine bitumengebundene dichte Massen, die aus Naturasphaltrohmehl, feinkörnigem Kalksteingemisch, Sand und/oder Splitt und ggf. wenigstens einem Füller oder weiteren Zusätzen besteht. Hierbei können die Mineralstoffe ausschließlich feinkörnig oder fein- und grobkörnig sein. Allgemein kann der als Gussasphalt verwendete Asphaltmastix beispielsweise einen höheren Anteil an Bitumen und/oder feinere mineralische Zuschläge als Straßenbauasphalte aufweisen. Zum Beispiel kann für die Gussasphalt- bzw. Asphaltmastixschicht (erste Schicht der Aufnahmewanne) ein Asphaltmastix von 9 bis 18 %, vorzugsweise von 12 bis 16 %, besonders bevorzugt von ca. 14 %, verwendet werden. Die Prozentangabe im Zusammenhang zu dem Asphaltmastix bedeutet den Anteil des Bindemittels, insbesondere des Bitumen. Diese Prozentangabe kann Volumenprozent oder Gewichtsprozent betreffen. Die Schichtdicke der ersten, aus Gussasphalt bestehenden Schicht kann 5 bis 40 mm, bevorzugt 10 bis 30 mm, besonders bevorzugt 15 bis 25 mm betragen. Dabei kann der Gussasphalt beispielsweise mehrlagig aufgetragen werden, so dass mehrere Lagen an Gussasphalt die erste Schicht bilden.

Der Gussasphalt kann beispielsweise in einer sich radial um den Grundablass drehenden Auftragsbewegung aufgebracht werden. Im Fall von mehreren Lagen an Gussasphalt kann die radiale Beginnfuge bzw. Beginnlinie des Auftrags über die bzw. relativ zu den weiteren Lagen versetzt angeordnet werden. Der Gussasphalt kann eine Dichte bei 20°C von 1,0 bis 5,0 g/cm³, bevorzugt von 1,5 bis 3,5 g/cm³, besonders bevorzugt von 2,0 bis 3,0 g/cm³, und/oder eine Hochviskose bis plastische Viskosität aufweisen.

Alternativ oder zusätzlich kann der für die, insbesondere erste, Schicht verwendete Asphalt bzw. Asphaltmischgut folgender Mischgutart entsprechen: AC 16 B S. Die Art der Gesteinskörnung kann beispielsweise GGK Moräne, FGK Moräne und/oder Gesteinsmehl umfassen. Das Bindemittel kann beispielsweise ein Straßenbaubitumen, insbesondere ein Straßenbaubitumen 50/70, sein.

Es ist möglich, dass eine zweite Schicht, insbesondere eine an der dem Erdboden zugewandten Oberfläche der ersten Schicht mittelbar oder unmittelbar angeordnete oder ausgebildete zweite Schicht, als eine Bitumen-Trag-Deckschicht ausbildet ist. In einer bevorzugten Ausführungsform wird das Material AC 16 BS 50-70 für die zweite Schicht - die Bitumen-Trag-Deckschicht - verwendet. Die Bitumen-Trag-Deckschicht, ist eine Kombination einer Trag- und einer Deckschicht, die eine vergleichsweise dünne Befestigung erlaubt. Diese kann, insbesondere bei einer Verwendung von einer Asphaltmischgutart AC 16 TD oder AC 16 BS, eine Schichtdicke von z. B. 5 bis 20 cm, bevorzugt von 7 bis 15 cm, besonders bevorzugt von 8,5 bis 12 cm aufweisen. Beispielsweise kann im Falle einer Asphalttrag- und Asphaltdeckschicht eine Körnung von 16 mm mit einer Schichtdicke von 8 cm verwendet werden.

Ferner kann es optional vorgesehen sein, dass eine dritte Schicht, insbesondere eine an der dem Erdboden zugewandten Oberfläche der ersten oder zweiten Schicht mittelbar oder unmittelbar angeordnete oder ausgebildete dritte Schicht, eine Tragschicht ausbildet, bevorzugt wird die dritte Schicht bzw. die Tragschicht aus wenigstens einer ersten Tragschichtlage aus (z. B. gebrochenem) Natursteinmaterial, insbesondere mit einer Korngrößenverteilung/Sieblinie von 0/32 mm bis 0/64-XXX, bevorzugt von 0/45 mm bis 0/56 mm, und/oder aus wenigstens einer weiteren Tragschichtlage mit einer Korngröße von 0-4 mm und/oder einer Korngrößenverteilung/Sieblinie von 0/8 mm bis 0/22 mm, insbesondere 0/16 mm gebrochenem Naturstein gebildet. Hierbei ist es vorteilhaft, wenn die die dritte Tragschichtlage bildende erste und/oder zweite Tragschichtlage kein Material in der Korngröße von Kies enthält. Kiesförmiges Material würde auf Grund der runden Körnerform zu Verarbeitungsnachteilen während des Aufbaus der dritten Schicht führen. Die erste Tragschichtlage kann beispielsweise eine Schichtdicke von 10 bis 50 cm, vorzugsweise von 15 bis 45 cm, besonders bevorzugt von 20 bis 40 cm, aufweisen. Die weitere Tragschichtlage kann beispielsweise auf der dem Aufnahmevolumen zugewandten Oberfläche der ersten Tragschichtlage aufgebracht werden und beispielsweise als Feinnivellierschicht bzw. als Ausgleichsschicht dienen. Die Schichtdicke der weiteren Tragschichtlage kann 0,5 bis 7 cm, bevorzugt 1,0 bis 5,0 cm, betragen.

Für die erste und/oder zweite Schicht, d. h. für die Bitumentragschicht und/oder die Bitumen-Trag-Deckschicht kann beispielsweise Trinkwasserasphalt eingesetzt werden. Dies birgt den Vorteil, dass etwaige zumindest abschnittsweise Setzungen der Gewässervorrichtung bis zu einem gewissen Grad rissfrei aufgenommen werden können. Im Falle von Rissen oder Beschädigungen der Gewässervorrichtung, insbesondere der Dichtungsschicht der Aufnahmewanne, können diese Beschädigungen durch Straßenbaupersonal einfach und schnell behoben werden.

Es kann sich als vorteilhaft erweisen, wenn eine weitere Schicht bzw. Materiallage, insbesondere eine an der dem Erdboden abgewandten Oberfläche bzw. an der dem Aufnahmevolumen zugewandte Oberseite der ersten Schicht mittelbar oder unmittelbar angeordnete oder ausgebildete weitere Schicht bzw. Materiallage, aus Steinmaterial, insbesondere Natursteinmaterial ausgebildet ist. Hierbei kann beispielsweise eine haufwerkartige Gesteinsschüttung aus grobem Material, d. h. mit einer Korngröße von größer 40 mm, bevorzugt von größer 50 mm, besonders bevorzugt von größer 60 mm verwendet werden. Ein derartiges Material hat den Vorteil, dass sich zwischen den einzelnen Steinen Hohlräume ausbilden, welche als Deckung und Rückzugsorte für die Zieltierart dienen kann. Als Naturstein bietet sich beispielsweise autochthones und/oder gebrochenes, insbesondere frostbeständiges (z. B. frostbeständig bei freier Bewitterung während einer wasserabgelassenen Gewässervorrichtung), Gesteinsmaterial an. Beispielsweise kann als Gesteinsmaterial Kalkstein, insbesondere Muschelkalk, verwendet werden. Insbesondere Dolomit bzw. Dolomitstein kann sich hierbei als vorteilhaft und frostbeständig erweisen.

Alternativ oder zusätzlich kann es vorgesehen sein, dass zumindest der Randbereich der Aufnahmewanne, insbesondere die Aufnahmewanne überwiegend, beispielsweise aus einer haufwerkartigen Gesteinsschüttung von grobem Material mit einer durchschnittlichen Korngröße von größer 51 mm, bevorzugt von größer 60 mm bedeckt bzw. gebildet ist. Hierbei kann der Randbereich der Aufnahmewanne beispielsweise eine Breite von mindestens 50 cm, bevorzugt von mindestens 80 cm, aufweisen und sich insbesondere vollständig um den Umfang der Aufnahmewannen erstrecken. Damit wird bei einer Entleerung der Aufnahmewanne eine Kapillarwirkung der weiteren Schicht bzw. der obersten Schicht und/oder eine potenzielle Ansiedlung ruderaler Vegetationssukzession verhindert.

Es ist möglich, dass an wenigstens einer, insbesondere an sämtlichen, Durchdringung der Aufnahmewanne, d. h. z. B. an der Durchdringung des Behälterkörpers, des Handhabungsbereichs und/oder der zweiten Ablaufeinrichtung an der Aufnahmewanne eine Vergussmasse, insbesondere durch eine Heiß-Fugenvergussmasse, verschlossen bzw. abgedichtet wird. Hierbei kann es sich als vorteilhaft erweisen, wenn die zu verfüllenden Trennfugen der Durchdringungsbereiche mindestens eine Breite von 10 mm, bevorzugt von 15 mm, besonders bevorzugt von 20 mm, und/oder eine Tiefe von mindestens 10 bis 300 mm, bevorzugt von 25 bis 225 mm, besonders bevorzugt von 45 bis 160 mm aufweist. Diese mit einer Fugenmasse bzw. mit einer Dichtmasse zu verfüllende Trennfuge kann sich dabei beispielsweise zumindest abschnittsweise durch beide Asphaltschichten, d. h. durch die erste und zumindest abschnittsweise durch die zweite Schicht erstrecken und/oder in diese einragen.

Als Fugenmasse, insbesondere als Heiß-Fugenmasse kann ein polymermodifizierter bitumenhaltige Fugenmasse gemäß TL Fug-StB und DIN EN 14188-1, Typ N2 zum Einsatz kommen und eine Dichte von ca. 1,1 g/cm³ aufweisen. Vor dem Auftrag der Fugenmasse kann ein Haftgrund, z. B. COLZUMIX-Haftgrund aufgebracht werden.

Die Akzeptanz bzw. die Anpassung der Gewässervorrichtung für eine gewünschte Zieltierart kann dadurch erreicht werden, dass in der obersten Schicht zumindest abschnittsweise Applikationen platziert werden. Derartige Applikationen können beispielsweise schlammkornhaltige Gebinde sein, d. h. z. B., dass in, insbesondere flexiblen und/oder wasserdurchlässigen, Behältern (z. B. BigBags) schlammkornhaltige Gebinde aufgenommen sind und diese Behälter in der Gewässervorrichtung abgelegt werden. Diese Behälter können bedarfsweise über behälterseitige Haken oder Ösen abgesetzt, aufgehoben oder umgesetzt werden. Derartige Behälter können beispielsweise ein Fassungsvolumen von 0,1 bis 1,0 m³, bevorzugt von 0,2 bis 0,5 m³ aufweisen.

Die Gewässervorrichtung ist vorzugsweise derart ausgebildet, dass diese zumindest abschnittsweise, insbesondere vollständig, durch ein Fahrzeug, insbesondere durch ein Nutzfahrzeug, befahrbar ist. Hierbei kann zumindest im Endmontagezustand das Deckelelement und/oder der Behälterkörper und/oder die erste Ablaufeinrichtung und/oder die zweite Ablaufeinrichtung und/oder die Aufnahmewanne zumindest abschnittsweise oder vollständig mit einem Fahrzeug, insbesondere einem Nutzfahrzeug, befahrbar sein. Durch die Befahrbarkeit der Gewässervorrichtung kann im Wartungsfall auf Fahrzeuge zurückgegriffen werden, um beispielsweise Reinigungsflüssigkeit, insbesondere Reinigungswasser, nahe oder in die Gewässervorrichtung zu transportieren. Auch kann über ein Fahrzeug antransportiertes Frischwasser komfortabel in die Aufnahmewanne übergeben werden, beispielsweise mittels eines mit einer Förderpumpe verbundenen Schlauchs. Mit einer Befahrbarkeit der Gewässervorrichtung oder deren Bestandteile ist gemeint, dass etwaige durch das Befahren der Gewässervorrichtung und/oder deren Bestandteile erfolgende Einwirkung keine oder keine wesentlichen Auswirkungen auf die Funktion der Gewässervorrichtung und deren Bestandteile hat. Insbesondere werden die durch die weitere, oberste Schicht gebildeten Hohlräume nicht oder nicht wesentlich beeinträchtigt bzw. verändert. Typischerweise kann die Befahrbarkeit der Gewässervorrichtung Fahrzeuge mit einem zulässigen Gesamtgewicht bzw. einer zulässigen Gesamtmasse von 0,5 bis 45 Tonnen, bevorzugt 0,8 bis 19 Tonnen, besonders bevorzugt von 1 bis 16 Tonnen, höchst bevorzugt 2,5 bis 10 Tonnen umfassen.

Ferner kann es sich als vorteilhaft erweisen, wenn die Gewässervorrichtung in einer Nord-Süd-Ausrichtung ausgerichtet ist, wobei die südexponierten Gewässerböschungen bzw. -ränder vorzugsweise steil ausgebildet sind, d. h. z. B., dass diese eine Steigung von mindestens 20 %, bevorzugt von mindestens 35 %, höchstbevorzugt von mindestens 40 %, aufweisen. Durch eine relativ steile Ausrichtung der im Süden platzierten Aufnahmewandung kann deren auf Grund von Sonneneinstrahlung erfolgende Erwärmung begünstigt werden. Zu der ersten Ablaufeinrichtung bzw. zu dem Grundablass hin weist die Aufnahmewandung ein mittleres Gefälle und/oder ein Mindestgefälle von mindestens 1,5 %, vorzugsweise von mindestens 2,0 % besonders bevorzugt von mindestens 2,5 % auf. Ein derartiges Gefälle ermöglicht einen zuverlässigen Ablauf von in der Aufnahmewanne befindlichem Wasser zu der ersten Ablauföffnung der ersten Ablaufeinrichtung. Auch lassen sich die Gefälle bzw. Neigungen in den angegebenen Bereichen durch Asphaltbauer, insbesondere im Handeinbau, zuverlässig und effizient herstellen. Neben der Gewässervorrichtung betrifft die Erfindung auch ein Verfahren zum

Betrieb einer Gewässervorrichtung zur Ansiedlung und/oder Beherbergung von Amphibien in einer hierin beschriebenen Gewässervorrichtung, wobei das Verfahren folgende Verfahrensschritte umfasst: (a) Befüllen einer Aufnahmewanne der Gewässervorrichtung mit Wasser, insbesondere mit Frischwasser, (b) Auslassen des Wassers aus der Aufnahmewanne zu einem Auslassort über eine mit einer Ablauföffnung ausgebildeten Ablaufeinrichtung vermittels zumindest temporäres Freigeben einer Ablaufeinrichtung einer gewässervorrichtungsseitigen Schließeinrichtung durch verstellen eines Schließmittels der Schließeinrichtung von einer Verschlussstellung in eine Freigabestellung. Hierbei kann es vorteilhaft sein, wenn jährlich wenigstens ein Befüllen der Aufnahmewanne mit Wasser und wenigstens einmal jährlich wenigstens ein Ablassen des Wassers aus der Aufnahmewanne erfolgt. Insbesondere kann wenigstens ein Befüllen der Aufnahmewanne mit Wasser in der ersten Jahreshälfte, insbesondere im März und/oder April und/oder Mai und/oder Juni, und ein Ablassen des Wassers aus der Aufnahmewanne in der zweiten Jahreshälfte, insbesondere im August und/oder September und/oder Oktober und/oder November, erfolgen. Damit wird es erreicht, dass die Gewässervorrichtung während der Wintermonate trocken liegt und folglich keine oder weniger Tiere die Gewässervorrichtung bewohnen, so dass bei einer Wiederbefüllung der Gewässervorrichtung im Frühjahr ein für Amphibien mit (temporärer) Gewässerbindung, insbesondere Unken und die Wechselkröte, bevorzugter und gefahrenarmer - weil keine oder wenige Fressfeinde aufweisender - Lebensraum bereitgestellt werden kann.

Sofern auf Grund von durch Sonneneinstrahlung und/oder Trockener Wetterverhältnisse die Wassermenge der Gewässervorrichtung einem kritischen Minimalwert annähern sollte, besteht die Möglichkeit Frischwasser zuzuführen.

Sämtliche Vorteile, Einzelheiten, Ausführungen und/oder Merkmale der erfindungsgemäßen Gewässervorrichtung sind auf das erfindungsgemäße Verfahren übertragbar bzw. anzuwenden.

Die erfindungsgemäße Gewässervorrichtung und/oder das erfindungsgemäße Verfahren ist auch dahingehend vorteilhaft, dass geringere Unterhaltungspflegekosten erreicht werden. Beispielsweise wird bei emissionsbedingter Versottung des Beckenbelags und/oder bei Vegetationseintrag eine Reinigung auf einfache und komfortable Weise ermöglicht, wobei die Reinigung beispielsweise von ungeschultem Personal ausführt werden kann. Insbesondere die relativ glatte Oberfläche der Asphaltschicht (der ersten Schicht) ermöglicht ein durch Beaufschlagung mit unter Druck stehendem Wasser (Abspritzen) einen effizienten Reinigungsprozess, da die Hohlräume der obersten Schicht bzw. der Gerölllage (weitere Schicht) mit geringem Widerstand von störendem Material freigespült werden können. Damit stehen die freigespülten Hohlräume bzw. Deckungsräume unter der Gerölllage für eine relativ gefahrenlose - weil keine oder wenige Fressfeinde aufweisende - Wiederbesiedelung durch eine Zieltierart, insbesondere durch Unken und die Wechselkröte, zur Verfügung. Mit anderen Worten wird eine wirtschaftliche Reinigung der Gewässervorrichtung von Sedimenteintrag (z. B. durch Laub, Blütenstaub, Saharasand) ermöglicht.

Die Erfindung ist anhand von Ausführungsbeispielen in den Zeichnungen näher erläutert. Dabei zeigt:
Fig. 1 eine Prinzipdarstellung einer Gewässervorrichtung gemäß einem Ausführungsbeispiel;
Fig. 2 eine Prinzipdarstellung eines Schichtaufbaus einer Aufnahmewanne der Gewässervorrichtung gemäß einem Ausführungsbeispiel;
Fig. 3 eine Prinzipdarstellung der aufnahmevolumenseitigen Enden der ersten und zweiten Ablaufeinrichtungen;

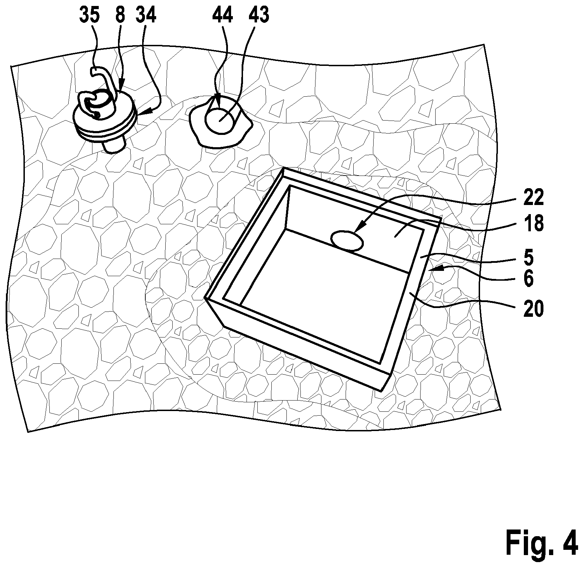

Fig. 4 eine Prinzipdarstellung aufnahmevolumenseitiger Enden der ersten, zweiten und dritten Ablaufeinrichtung in einem Zwischenmontagezustand;
Fig. 5 eine schematische Vollschnittdarstellung eines aufnahmevolumenseitigen ersten Endes einer ersten, als Grundablass dienenden Ablaufeinrichtung.

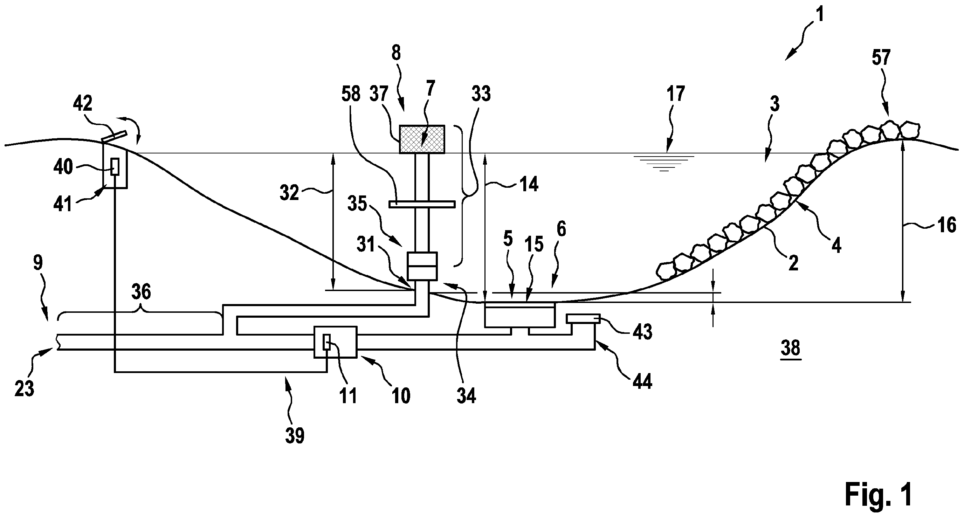

Figur 1 zeigt eine Gewässervorrichtung 1, zur Ansiedlung und/oder Beherbergung von Amphibien, umfassend (a) eine zur Aufnahme von Wasser eingerichtete und mit wenigstens einer Aufnahmewandung 2 ein Aufnahmevolumen 3 definierende Aufnahmewanne 4, (b) eine mit einer Ablauföffnung 5, 7 ausgebildete Ablaufeinrichtung 6, 8, welche eingerichtet ist, über die Ablauföffnung 5, 7 in der Aufnahmewanne 4 befindliches Wasser zumindest temporär, insbesondere überwiegend oder vollständig, zu einem Auslassort 9 abzuleiten, (c) eine der Ablaufeinrichtung 6, 8 zugeordnete Schließeinrichtung 10, wobei die Schließeinrichtung 10 wenigstens ein Schließmittel 11 umfasst, welches zwischen einer die Ablaufeinrichtung 6, 8 verschließenden Verschlussstellung 12 und einer die Ablaufeinrichtung 6, 8 freigebenden und das in der Aufnahmewanne 4 befindliche Wasser zumindest teilweise, insbesondere vollständig, zu dem Auslassort 9 abfließen lassende Freigabestellung 12 verstellbar ist.

Die Gewässervorrichtung 1 weist wenigstens eine erste Ablaufeinrichtung 6 mit einer ersten Ablauföffnung 5 und wenigstens eine zweite Ablaufeinrichtung 8 mit einer zweiten Ablauföffnung 7 auf, wobei über die Ablauföffnungen Wasser aus der Aufnahmewanne 4 zumindest temporär zu wenigstens einem Auslassort 9 ableitbar ist und die erste und die zweite Ablauföffnung 5, 7 zueinander einen Abstand 14 aufweisen, insbesondere beträgt der Abstand 14 der ersten Ablauföffnung 5 zu der zweiten Ablauföffnung 7 mindestens ein Viertel, bevorzugt mindestens die Hälfte, besonders bevorzugt mindestens Dreiviertel der maximalen Wasserhöhe 16 von einem tiefsten Punkt 15 der Aufnahmewanne 4 zu einem Randbereich der Aufnahmewanne 4 bzw. des Aufnahmevolumens 3, hierbei kann der oberste Punkt des Randbereichs einen Referenzwert für die Höhe 16 der Aufnahmewanne 4 bilden. Alternativ oder zusätzlich kann der Referenzbereich den bestimmungsgemäßen Wasserpegel 17 entsprechen. Der bestimmungsgemäße Wasserpegel 17 entspricht der Höhe der zweiten, als Überlauf dienenden Ablauföffnung 7 der zweiten Ablaufeinrichtung 8.

Wie in Figur 1 dargestellt ist eine erste Ablaufeinrichtung 6 als Grundablasseinrichtung ausgebildet, derart, dass über diese in der Aufnahmewanne 4 befindliches Wasser zumindest temporär vollständig, zu einem Auslassort 9 ableitbar ist, wobei über die der ersten Ablaufeinrichtung 6 zugeordnete Schließeinrichtung 10 das Abfließen des Wassers über die erste Ablaufeinrichtung 6 zumindest temporär wahlweise sperrbar und freigebbar ist.

Die erste Ablauföffnung 5 der ersten Ablaufeinrichtung 6 ist in der in Figur 1 gezeigten Ausführungsform in einem Bodenbereich der Aufnahmewanne 4 und dort an einem tiefsten Punkt 15 der Aufnahmewanne 4 angeordnet oder ausgebildet ist.

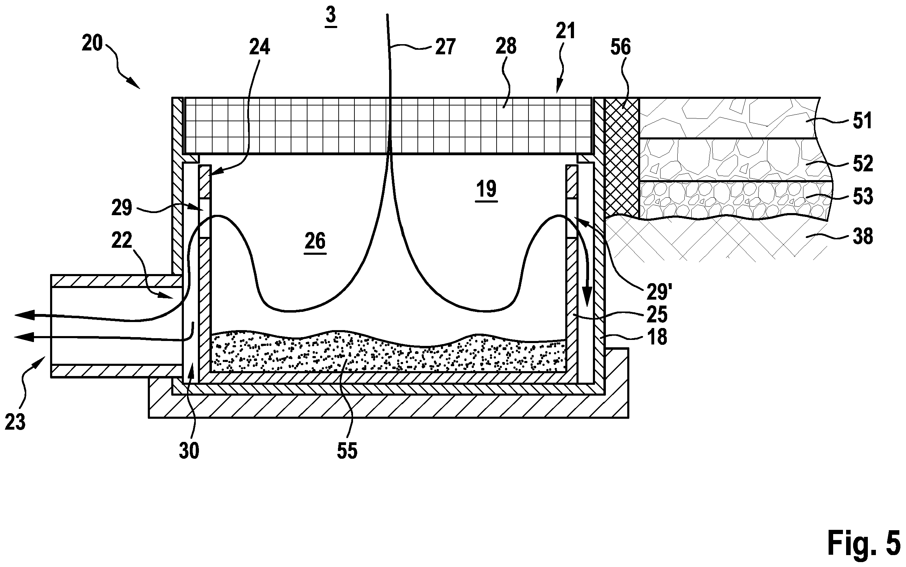

Die wenigstens eine Ablaufeinrichtung 6, 8, insbesondere die erste Ablaufeinrichtung 6, umfasst einen einen durch wenigstens eine Behälterwandungen 18 begrenzenden Behälterkörperinnenraum 19 definierenden Behälterkörper 20, wobei insbesondere der Behälterkörper 20 im Endmontagezustand eine zum Aufnahmevolumen 3 der Aufnahmewanne 4 ausgerichtete erste Behälteröffnung 21 aufweist, vgl. Figuren 1 und 5. Alternativ oder zusätzlich kann der Behälterkörper 20 eine zweite Behälteröffnung 22 aufweisen, durch welche in dem Behälterkörperinnenraum 19 befindliches Wasser zu einem Auslassort 9 ableitbar ist. Insbesondere kann das durch die zweite Behälteröffnung 22 hindurchtretende Wasser über eine sich an diese Behälteröffnung 22 anschließende Ablaufleitung und über deren Auslassöffnung 23 in die Umwelt austreten.

Wie insbesondere aus Figur 5 ersichtlich, ist in und/oder an dem Behälterkörper 20 zumindest abschnittsweise wenigstens ein Fangbehälter 24, insbesondere ein Schlammfangbehälter, angeordnet oder anordenbar, der derart eingerichtet ist, dass ein in einem durch Fangbehälterwandungen 25 definierten Fangbehälterinnenraum 26 befindliches Wasser zu dem Auslassort 9 ableitbar ist, wobei Fangstoffe (nicht dargestellt) in dem Fangbehälterinnenraum 26 zurückgehalten werden. Damit kann sich ein Weg für das von dem Aufnahmevolumen 3 abgeleitete Wasser entsprechend dem Pfeil 27 ergeben, wobei zunächst das Wasser von dem Aufnahmevolumen 3 durch ein ggf. montiertes Deckelelement 28 in einen Behälterkörperinnenraum 19 und in einen im Behälterkörperinnenraum 19 angeordneten Fangbehälterinnenraum 26 gelangt, hierbei durchtritt das Wasser die erste Behälterkörperöffnung 21. Innerhalb des Fangbehälterinnenraums 26 können sich im Wasser befindliche Schwebstoffe in einem Bodenbereich 55 des Fangbehälterinnenraums 26 absetzen. Das obenliegende, schwebstoffärmere Wasser kann über die Überlauföffnungen 29, 29' der Fangbehälterwandung 25 in einen, beispielsweise ringspaltartige geformten, Zwischenraum 30 gelangen und von dort über die zweite Behälteröffnung 22 in den sich an diese Behälteröffnung 22 anschließenden Ablaufkanal 23 zum Ablaufort 9 abgeleitet werden.

Ferner ist aus Figur 5 ersichtlich, dass in oder an, insbesondere auf, dem Behälterkörper 20 zumindest temporär ein zumindest abschnittsweise wasserdurchlässiges Deckelelement 28 zumindest temporär anordenbar bzw. lösbar befestigbar ist, bevorzugt ist das Deckelelement 28 gitterartig ausgebildet. Das Deckelelement 28 kann insbesondere im Fall einer von Wasser abgelassenen Aufnahmewanne 4 eingesetzt werden, um eine Verletzungsgefahr für die Aufnahmewanne 4 betretende Personen zu reduzieren bzw. zu bannen.

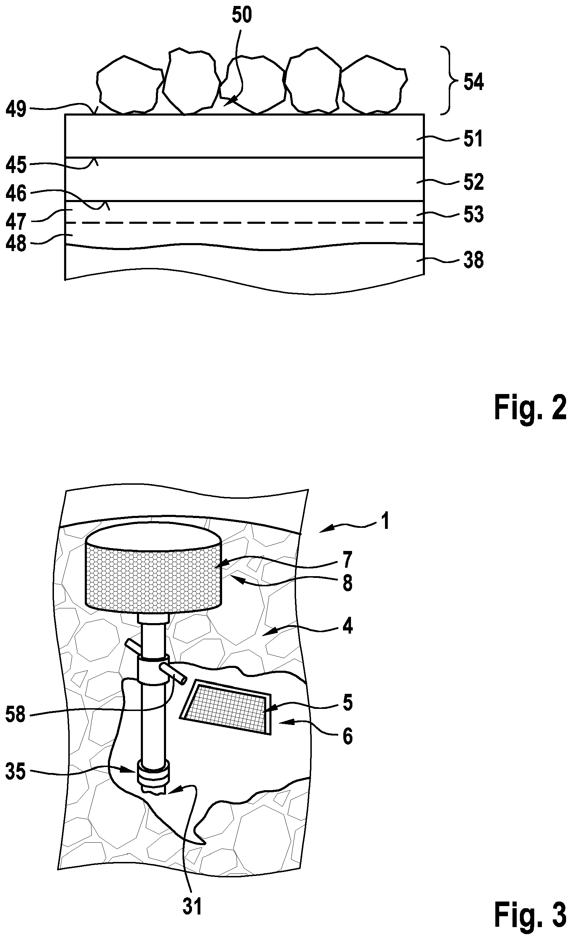

Gemäß der in den Figuren 1 und 3 gezeigten Ausführungsform kann eine Ablauföffnung 5, 7 einer Ablaufeinrichtung 6, 8, insbesondere die zweite Ablauföffnung 7 der zweiten Ablaufeinrichtung 8, in einer oberen Hälfte, bevorzugt in einem oberen Drittel, besonders bevorzugt in einem oberen Viertel, höchst bevorzugt in einem oberen Sechstel, der Höhe des tiefsten Punktes 15 der Aufnahmewanne 4 zu einem durch den Randbereich 31 definierten maximalen Wasserpegel (nicht dargestellt) und/oder auf Höhe des bestimmungsgemäßen maximalen Wasserpegels 17 des Aufnahmevolumens 3 bzw. der Aufnahmewanne 4 angeordnet oder ausgebildet sein. In der dargestellten Ausführungsform ist die zweite, als Überlauf dienende Ablauföffnung 7 der zweiten Ablaufeinrichtung 8 auf Höhe des bestimmungsgemäßen Wasserpegels 17 angeordnet oder ausgebildet.

Die Ablaufeinrichtung 6, 8, insbesondere die als Überlauf dienende zweite Ablauföffnung 7, ist höhenverlagerbar ausgebildet. Dabei besteht die Möglichkeit die Höhe der Ablauföffnung 7 relativ zu einem Bodenbereich 31 der Aufnahmewanne 4 zu verändern und vorzugsweise zu arretieren. Hierbei kann die Höhenverlagerbarkeit vorzugsweise derart realisiert sein, dass eine stufenlose Verstellung der Höhe 32 der Ablauföffnung 7 relativ zu einem Bodenbereich 31 der Aufnahmewanne 4 verstellbar ist.

Wenigstens eine Ablaufeinrichtung 6, 8, insbesondere die als Überlauf dienende zweite Ablaufeinrichtung 8, kann ein, insbesondere innerhalb des Aufnahmevolumens 3 angeordnetes oder ausgebildetes, Kupplungsmittel 35 zur lösbaren Befestigung eines ersten Ablaufeinrichtungsabschnitts 33 an einem weiteren Ablaufeinrichtungsabschnitt 34 umfassen. Durch das Kupplungsmittel 35, das wenigstens zwei lösbar miteinander verbindbare Kupplungselemente umfasst, kann die Ablaufeinrichtung zumindest temporär in wenigstens zwei Ablaufeinrichtungsabschnitte 33, 34 zerlegt und wieder in eine mediendichte Leitung zusammengesetzt werden. Insbesondere im Fall der Entwässerung der Aufnahmewanne, z. B. in den Wintermonaten, kann auf diese Weise der als Teil des Überlaufs dienende Ablaufeinrichtungsabschnitt 33 demontiert und in einem vorzugsweise trockenen und/oder insbesondere definiert temperierten Lagerraum gelagert werden. Auch eine Reinigung zumindest des demontierten Ablaufeinrichtungsabschnitt 33 kann im getrennten Zustand vereinfacht erfolgen.

Es kann ein Greifelement 58 zwischen dem Kupplungsmittel 35 und dem freien, stromauf des Kupplungsmittels 35 befindlichen Ende der Ablaufeinrichtung 6, 8 angeordnet oder ausgebildet sein. Das Greifelement 58 dient dazu manuell oder mittels eines Werkzeugs ein Drehmoment auf den stromauf des Kupplungsmittels 35 befindlichen und lösbaren Ablaufeinrichtungsabschnitt 33 einzubringen. Durch das hiermit eingebrachte Drehmoment kann das Kupplungsmittel 35 geöffnet oder geschlossen werden. Das Greifelement 58 erstreckt sich beispielsweise senkrecht und radial abstehend zu einem rohrartigen Abschnitt eines über das Kupplungsmittel 35 lösbaren Ablaufeinrichtungsabschnitt 33, vgl. Figuren 1 und 3.

Aus Figur 1 ist ersichtlich, dass zumindest abschnittsweise über einen gemeinsamen Ablaufleitungsabschnitt 36 Wasser aus dem Aufnahmevolumen 3 über die erste und die zweite Ablaufeinrichtung 6, 8 zu dem Auslassort 9 ableitbar ist. Der gemeinsame Ablaufleitungsabschnitt 36 ist hierbei stromab einer Schließeinrichtung 10, insbesondere stromab einer der ersten Ablaufeinrichtung 6 zugeordneten Schließeinrichtung 10, angeordnet oder ausgebildet, damit kann unabhängig von der Stellung des Schließmittels 11 der Schließeinrichtung 10 ein Ableiten von Wasser der zweiten Ablaufeinrichtung 8 bzw. Ablauföffnung 7 zuverlässig zum Auslassort 9 abgeleitet werden.

Eine Ablauföffnung 5, 7 der Ablaufeinrichtung 6, 8, insbesondere die als Teil des Überlaufs dienende zweite Ablauföffnung 7 der zweiten Ablaufeinrichtung 8, kann durch ein wasserdurchlässiges Schutzmittel 37 derart verschlossen sein, dass Fremdstoff (d. h. Feststoffe einer definierten Mindestgröße), insbesondere Blätter oder ähnliches, durch die Ablauföffnung 5, 7 nicht hindurchtreten können, vgl. Figur 3. Auch können frühe Entwicklungsstadien (z. B. Kaulquappen und/oder Larven) der an bzw. in der Gewässervorrichtung aufzuwachsenden Zieltiere bzw. Ziertierarten durch das Schutzmittel vor dem Eindringen in und einem Ableiten durch die Ablauföffnung bewahrt werden. Hierzu kann es vorgesehen sein, dass die Ablauföffnung 5, 7 mit einem siebartigen Element, beispielsweise einem Lochblech versehen ist, wobei die Löcher bzw. Öffnungen des Lochblechs eine definierte maximale Größe in deren lichten Weite bzw. in deren Durchmesser aufweisen. Beispielsweise wird ein Lochblech mit einem maximalen Lochdurchmesser von 6 mm, bevorzugt von 5 mm, besonders bevorzugt von maximaler Lochdurchmesser 4 mm, höchst bevorzugt von 2,5 mm, verwendet. Beispielsweise lässt sich ein Durchtritt von Kaulquappen und/oder Larven, insbesondere von Gelbbauchunken und/oder Wechselkörten, bei einem Lochdurchmesser von 2 mm signifikant reduzieren bzw. geringhalten.

Eine Schließeinrichtung 10, insbesondere eine der als Grundablauf dienenden zweiten Ablaufeinrichtung 8 zugeordnete Schließeinrichtung 10, kann zwischen einem Auslassort 9 und der Ablauföffnung 5, 7, insbesondere zwischen dem Auslassort 9 und der zweiten Ablauföffnung 7, angeordnet oder ausgebildet sein. In einer bevorzugten Ausführungsform kann ein Schließmittel 11 der Schließeinrichtung 10 in einem unterhalb einer Erdoberfläche 38 platzierten, insbesondere unterhalb einer Aufnahmewanne 4 platzierten, ablaufeinrichtungsseitigen Leitungsabschnitt angeordnet oder ausgebildet, wobei bevorzugt das Schließmittel 11 vermittels eines Steuer- und/oder Regelungsmittels 39 zwischen einer Verschlussstellung und einer Freigabestellung verstellbar ist. Dabei kann eine Handhabe 40 zur manuellen oder werkzeuggestützten, Betätigung des Steuerungs- und/oder Regelungsmittels 39 im Bereich eines zumindest temporär frei zugänglichen Handhabungsbereichs 41 angeordnet oder ausgebildet sein, insbesondere ist der Handhabungsbereich 41 zumindest temporär durch eine Handhabungsbereichsabdeckung 42 zur Umwelt hin abdeckbar. Der Handhabungsbereich 41 kann ein durch Wandabschnitte ausgebildeter Raum sein, innerhalb dem die Handhabe 40 angeordnet. Der Handhabungsbereich 41 bzw. die Handhabe 40 kann im Bereich der Erdoberfläche 38 angeordnet sein. Beispielsweise schließt eine Handhabungsbereichsabdeckung 42, insbesondere im Wesentlichen, bündig mit die Handhabungsbereichsabdeckung 42 umgebenden Flächen der Gewässervorrichtung 1, insbesondere mit einer Oberfläche des Randbereichs 57 der Aufnahmewanne und/oder mit einer Oberfläche der Aufnahmewandung 2 ab. Beispielsweise ist der Handhabungsbereich 41 bzw. die Handhabe 40 horizontal außerhalb und/oder oberhalb zu einem durch den bestimmungsgemäßen Wasserpegel 17 definierten Wasservolumen und/oder durch den Randbereich 57 der Aufnahmewanne 4 definierten theoretischen Wasservolumen der Aufnahmewanne angeordnet oder ausgebildet.

Der Bau der Gewässervorrichtung 1 wird dadurch vereinfacht, dass eine zumindest temporär Wasser aus einem Wannenaufnahmevolumenmontagebereich zu einem Ablaufort 9 ableitende dritte Ablauföffnung 43 einer dritten Ablaufeinrichtung 44 vorgesehen ist, welche dort befindliches Wasser zu einem Auslassort 9 führt. Die dritte Ablauföffnung 43 ist dabei in einem tieferen Höhenniveau als die erste und die zweite Ablauföffnung 5, 7 angeordnet oder ausgebildet ist. Insbesondere wird die dritte Ablauföffnung 43 im Endmontagezustand durch einen Aufnahmewannenabschnitt überdeckt. Mit anderen Worten ist die dritte Ablauföffnung 43 im Endmontagezustand nicht mehr zugänglich bzw. nutzbar. Die dritte Ablauföffnung 43 dient lediglich zur Wasserableitung während des Bauprozesses der Gewässervorrichtung 1 und insbesondere zur Trockenlegung von mit asphaltenthaltenden Schichten 51, 52 zu versehenden Bereichen der Aufnahmewanne 4.

In Figur 2 ist der insbesondere schichtartige Aufbau der Aufnahmewanne 4 schematisch dargestellt. Dabei ist die Aufnahmewanne 4 zumindest abschnittsweise, insbesondere vollflächig, schichtartig aufgebaut. Eine erste Schicht 51 ist hierbei aus einem Gussasphalt ausgebildet. Dabei kann der Gussasphalt beispielsweise einen thermoplastischen Materialbestandteil und/oder einen Anteil an Bitumen von 2 bis 40 Masse-%, bevorzugt von 3 bis 30 Masse-%, besonders bevorzugt von 4 bis 20 Masse-% aufweisen. Die erste Schicht 51 kann eine Dichtungsschicht ausbilden, welche dazu dient, das in der Aufnahmewanne 4 befindliche Wasser zu halten.

Eine zweite Schicht 52, insbesondere eine an der dem Erdboden 38 zugewandten Oberfläche 45 der ersten Schicht 51 mittelbar oder unmittelbar angeordnete oder ausgebildete zweite Schicht 52, ist als Bitumen-Trag-Deckschicht ausgebildet.

Eine dritte Schicht 53, insbesondere eine an der dem Erdboden 38 zugewandten Oberfläche 45, 46 der ersten oder zweiten Schicht 51, 52 mittelbar oder unmittelbar angeordnete oder ausgebildete dritte Schicht 53, ist als Tragschicht ausbildet. Diese dritte Schicht 53 kann bevorzugt zumindest abschnittsweise, insbesondere vollständig, aus wenigstens einer ersten Tragschichtlage 47 aus Natursteinmaterial, insbesondere ein Natursteinmaterial mit einer Korngrößenverteilung/Sieblinie von 0/32 mm bis 0/64-XXX, und/oder aus wenigstens einer weiteren Tragschichtlage 48 aus Natursteinmaterial mit einer Korngröße von 0-4 mm und/oder einer Korngrößenverteilung/Sieblinie von 0,8 mm bis 0/22 mm gebrochenem Naturstein gebildet sein. Insbesondere wird für die erste Tragschichtlage 47 ein gebrochenes Natursteinmaterial mit einer Korngrößenverteilung/Sieblinie von 0/32 mm und/oder 0/45 mm verwendet. Für eine weiteren Tragschichtlage 48 kann beispielsweise gebrochenes Natursteinmaterial mit einer Korngröße von 0 bis 4 mm und/oder mit einer Korngrößenverteilung/Sieblinie 0/16 mm verwendet werden.

Eine weitere Schicht 54, insbesondere eine an der der Erdoberfläche 38 bzw. dem Erdboden abgewandten Oberfläche 49 der ersten Schicht 51 mittelbar oder unmittelbar angeordnete oder ausgebildete weitere Schicht 54, kann beispielsweise aus Steinmaterial, insbesondere Natursteinmaterial, mit einer Korngröße 50 bis 400 mm, insbesondere 75 bis 330 mm, besonders bevorzugt 90 bis 250 mm ausgebildet sein. Die weitere Schicht 54 ist als die obenliegende, vorzugsweise unmittelbar auf der ersten Schicht 51 aufliegende, Geröll- bzw. Natursteinlage ausgebildet. Durch die gewählte Korngröße der weiteren Schicht 54 bilden sich Hohlräume 50, insbesondere zu der Auflageschicht (erste Schicht 51), aus. Diese Hohlräume 50 können als Deckung bzw. als Rückzugsort für die an der Gewässervorrichtung 1 anzusiedelnden Zieltierarten dienen.

Das die weitere Schicht 54 bildende Material kann derart auf die erste Schicht 51 aufgebracht sein, dass die weitere Schicht 54 eine Lagenstärke von einer Kornstärke der weiteren Schicht 54 aufweist. Damit kann z. B. die Mächtigkeit der weiteren Schicht 54 eine Kornstärke von beispielsweise 50 bis 400 m, bevorzugt von 90 bis 250 mm aufweisen. Dadurch wird die Reinigung der durch die weitere Schicht 54 gebildeten Hohlräume 50 begünstigt, da ausreichend Spaltbereiche und Hohlräume 50 vorliegen, um Reinigungswasser mit ausreichendem Druck dort wirken zu lassen.

Eine Lagesicherung des die weitere Schicht 54 bildenden Materials kann durch Formschluss erreicht werden, beispielsweise verkanten bzw. berühren sich die innerhalb einer Lage aufgebrachten Steine gegenseitig und verhindern damit deren Verrutschen.

Insgesamt kann in einer bevorzugten Ausführungsform auf eine Erdoberfläche 38 unmittelbar eine aus zwei Tragschichtlagen 47, 48 gebildete dritte Schicht 53 (Tragschicht), auf der dritten Schicht 53 unmittelbar eine zweite Schicht 52 (Bitumen-Trag-Deckschicht), auf der zweiten Schicht 52 eine erste Schicht 51 (Gussasphalt und/oder Dichtungsschicht) und auf die erste Schicht 51 eine weitere Schicht 54 bzw. eine Steinhaufwerklage aufgebracht sein. Die erste, zweite und dritte bilden die Eigentliche das Wasser der Gewässervorrichtung 1 dichtend aufnehmende Aufnahmewanne 4, die weitere Schicht 54 dient zur Bildung von Hohlräumen 50 und weiterer für die Besiedelung der Gewässervorrichtung 1 durch Amphibien vorteilhafter Aspekte, z. B. abschnittsweise Vergrößerung Oberfläche bzw. der Oberflächenrauheit.

Es ist möglich, dass an wenigstens einer, insbesondere an sämtlichen, Durchdringung der Aufnahmewanne 4, d. h. z. B. an der Durchdringung des Behälterkörpers 20, des Handhabungsbereichs 41 und/oder der zweiten Ablaufeinrichtung 8 durch die Aufnahmewanne 4 eine Dichtmasse 56 bzw. Vergussmasse, insbesondere durch eine Heiß-Fugenvergussmasse, verschlossen bzw. abgedichtet wird, vgl. Figur 5.

Die der vierten Schicht 54 zugewandte Oberfläche 49 der ersten Schicht 51 kann relativ glatt ausgebildet sein, derart, dass im Falle der Beaufschlagung von auf der Oberfläche 49 liegendem Unrat bzw. zu entfernendem Material durch unter Druck stehendes Wasser (z. B. Hochdruckwasser) dieses Material wenig Halt auf der Oberfläche 49 findet und sich entsprechend leicht entfernen lässt. Eine relativ glatte Oberfläche 49 kann hierbei beispielsweise bedeuten, dass diese einen Rutschsicherheitsfaktor von R13, bevorzugt von weniger als R13, besonders bevorzugt von weniger als R12, höchst bevorzugt von weniger als R11 aufweist. Alternativ oder zusätzlich ist eine glatte Oberfläche 49 der asphaltbestandteileaufweisenden ersten Schicht 51 (z. B. Asphaltmastixschicht) dadurch zu erreichen, dass diese nicht mit körnigem Material, insbesondere nicht mit Sand, abgestreut wird.

Die erste und/oder die zweite, Asphalt oder Asphaltbestandteile aufweisende Schicht 51, 52 kann bzw. können vorzugsweise aus sortenreinem Material gebildet sein. Dies erhöht den, einer derartigen beispielsweise aus Naturschutzbedürfnissen ausgestalteten Gewässervorrichtung 1, ökologischen Fingerabdruck, da im Falle eines Abriss bzw. Rückbau der Gewässervorrichtung 1 diese gänzlich oder zumindest zu einem höheren Grad (insbesondere auch bei strengen Umweltauflagen) recycelbar ist. Als sortenreines Material ist insbesondere Asphaltmaterial zu verstehen, das keine oder kaum (d. h. kleiner 5 Vol.-%) recycelte bzw. wiederverwertete Materialanteile, insbesondere keine oder kaum Abfälle wie beispielsweise Gummiabrieb bei rezyklierten Autobahnasphalt (auch als Fräsgut bezeichnet) als Materialbestandteil, enthält.

Die Gewässervorrichtung 1 ist derart ausgebildet, dass diese zumindest abschnittsweise, insbesondere vollständig, durch ein Fahrzeug (nicht dargestellt), insbesondere durch ein Nutzfahrzeug, befahrbar ist. Hierbei ist zumindest im Endmontagezustand das Deckelelement 28 und/oder der Behälterkörper 20 und/oder die erste Ablaufeinrichtung 6 und/oder die zweite Ablaufeinrichtung 8 und/oder die Aufnahmewanne 4 zumindest abschnittsweise oder vollständig mit einem Fahrzeug, insbesondere einem Nutzfahrzeug, befahrbar.

Das erfindungsgemäße Verfahren zum Betrieb einer Gewässervorrichtung 1 zur Ansiedlung und/oder Beherbergung von Amphibien, in einer hierin beschriebenen Gewässervorrichtung 1 zeichnet sich durch folgende Verfahrensschritte aus: (a) Befüllen einer Aufnahmewanne 4 der Gewässervorrichtung 1 mit Wasser, insbesondere mit Frischwasser, (b) Auslassen des Wassers aus der Aufnahmewanne 4 zu einem Auslassort 9 über eine mit einer Ablauföffnung 5, 7 ausgebildeten Ablaufeinrichtung 6, 8 vermittels eines zumindest temporären Freigeben einer Ablaufeinrichtung 6, 8 einer gewässervorrichtungsseitigen durch verstellen eines Schließmittels 11 einer Schließeinrichtung 10 von einer Verschlussstellung 12 in eine Freigabestellung 13.

### BEZUGSZEICHENLISTE

- 1: Gewässervorrichtung
- 2: Aufnahmewandung
- 3: Aufnahmevolumen
- 4: Aufnahmewanne
- 5: erste Ablauföffnung
- 6: erste Ablaufeinrichtung
- 7: zweite Ablauföffnung
- 8: zweite Ablaufeinrichtung
- 9: Auslassort
- 10: Schließeinrichtung
- 11: Schließmittel
- 14: Abstand zwischen 15 und 17
- 15: tiefster Punkt von 4
- 16: Höhe von 15 zu 4
- 17: bestimmungsgemäßer Wasserpegel
- 18: Behälterwandung
- 19: Behälterkörperinnenraum
- 20: Behälterkörper
- 21: erste Behälteröffnung
- 22: zweite Behälteröffnung
- 23: Auslassöffnung
- 24: Fangbehälter
- 25: Fangbehälterwandung
- 26: Fangbehälterinnenraum
- 27: Pfeil
- 28: Deckelelement
- 29, 29': Überlauföffnung
- 30: Zwischenraum
- 31: Bodenbereich
- 32: Höhe zwischen 7 und 31
- 33: erster Ablaufeinrichtungsabschnitt
- 34: zweiter Ablaufeinrichtungsabschnitt
- 35: Kupplungsmittel
- 36: gemeinsamer Ablaufeinrichtungsabschnitt
- 37: Schutzmittel
- 38: Erdoberfläche
- 39: Steuerungs- und/oder Regelungsmittel
- 40: Handhabe
- 41: Handhabungsbereich
- 42: Handhabungsbereichsabdeckung
- 43: dritte Ablauföffnung
- 44: dritte Ablaufeinrichtung
- 45: Oberfläche von 51
- 46: Oberfläche von 52
- 47: erste Tragschichtlage
- 48: weitere Tragschichtlage
- 49: Oberfläche von 51
- 50: Hohlraum
- 51: erste Schicht
- 52: zweite Schicht
- 53: dritte Schicht
- 54: weitere Schicht
- 55: Bodenbereich
- 56: Dichtmasse
- 57: Randbereich von 4

## Patentansprüche

1. Gewässervorrichtung, zur Ansiedlung von Amphibien, umfassend
- eine zur Aufnahme von Wasser eingerichtete und mit wenigstens einer Aufnahmewandung (2) ein Aufnahmevolumen (3) definierende Aufnahmewanne (4),
- eine mit einer Ablauföffnung (5, 7) ausgebildete Ablaufeinrichtung (6, 8), welche eingerichtet ist, über die Ablauföffnung (5, 7) in der Aufnahmewanne (4) befindliches Wasser zumindest temporär, insbesondere überwiegend oder vollständig, zu einem Auslassort (9) abzuleiten,
- eine der Ablaufeinrichtung (6) zugeordnete Schließeinrichtung (10), wobei die Schließeinrichtung (10) wenigstens ein Schließmittel (11) umfasst, welches zwischen einer die Ablaufeinrichtung (6) verschließenden Verschlussstellung und einer die Ablaufeinrichtung freigebenden und das in der Aufnahmewanne (4) befindliche Wasser zumindest teilweise, insbesondere vollständig, zu dem Auslassort (9) abfließen lassende Freigabestellung verstellbar ist, wobei
- wenigstens eine erste Ablaufeinrichtung (6) mit einer ersten Ablauföffnung (5) und wenigstens eine zweite Ablaufeinrichtung (8) mit einer zweiten Ablauföffnung (7), wobei über die Ablauföffnungen (5, 7) Wasser aus der Aufnahmewanne (4) zumindest temporär zu wenigstens einem Auslassort (9) ableitbar ist und die erste und die zweite Ablauföffnung (5, 7) zueinander einen Abstand (14) aufweisen.

2. Gewässervorrichtung (1) nach Anspruch 1, **dadurch gekennzeichnet, dass** der Abstand (14) der ersten und zweiten Ablauföffnung (5, 7) mindestens ein Viertel, bevorzugt mindestens die Hälfte, besonders bevorzugt mindestens Dreiviertel der maximalen Wasserhöhe (16) von einem tiefsten Punkt (15) des Aufnahmevolumens (3) und/oder der Aufnahmewanne (4) zu einem die Höhe der Aufnahmewanne (4) betreffenden Referenzwert, insbesondere einem bestimmungsgemäßen Wasserpegel (17) des Aufnahmevolumens (3), beträgt.

3. Gewässervorrichtung (1) nach Anspruch 1 oder 2, **dadurch gekennzeichnet, dass** eine erste Ablaufeinrichtung (6), insbesondere eine als Grundablasseinrichtung ausgebildete erste Ablaufeinrichtung (6), derart eingerichtet ist, dass über diese in der Aufnahmewanne (4) befindliches Wasser zumindest temporär, insbesondere überwiegend oder vollständig, zu einem Auslassort (9) ableitbar ist, wobei über die der ersten Ablaufeinrichtung (6) zugeordnete Schließeinrichtung (10) das Abfließen des Wassers über die erste Ablaufeinrichtung (6) zumindest temporär sperrbar ist.

4. Gewässervorrichtung (1) nach Anspruch 2 oder 3, **dadurch gekennzeichnet, dass** die erste Ablauföffnung (5) der ersten Ablaufeinrichtung (6) in einem unteren Drittel, bevorzugt in einem unteren Viertel, der maximalen Wasserhöhe (16) von einem tiefsten Punkt (15) des Aufnahmevolumens (3) zu einem die Höhe der Aufnahmewanne (4) betreffenden Referenzwert, insbesondere einem bestimmungsgemäßen Wasserpegel (17) der Aufnahmewanne (4), angeordnet oder ausgebildet ist, besonders bevorzugt ist die erste Ablauföffnung (5) der ersten Ablaufeinrichtung (6) in einem Bodenbereich der Aufnahmewanne (4), höchst bevorzugt an einem tiefsten Punkt (15) der Aufnahmewanne (4) angeordnet oder ausgebildet ist.

5. Gewässervorrichtung (1) nach einem der vorhergehenden Ansprüche, **dadurch gekennzeichnet, dass** wenigstens eine Ablaufeinrichtung (6, 8), insbesondere die erste Ablaufeinrichtung (6), einen einen durch Behälterwandungen (18) begrenzenden Behälterkörperinnenraum (19) definierenden Behälterkörper (20) umfasst, wobei insbesondere der Behälterkörper (20) im Endmontagezustand eine zum Aufnahmevolumen (3) der Aufnahmewanne (4) ausgerichtete erste Behälteröffnung (21) aufweist und/oder eine zweite Behälteröffnung (22) aufweist, durch welche in dem Behälterkörperinnenraum (19) befindliches Wasser zu einem Auslassort (9) ableitbar ist.

6. Gewässervorrichtung (1) nach Anspruch 5, **dadurch gekennzeichnet, dass** in oder an dem Behälterkörper (20) zumindest abschnittsweise ein Fangbehälter (24), insbesondere ein Schlammfangbehälter, angeordnet oder anordenbar ist, der derart eingerichtet ist, dass ein in einem durch Fangbehälterwandungen (25) definierten Fangbehälterinnenraum (26) befindliches Wasser zu dem Auslassort (9) ableitbar ist, wobei Fangstoffe in dem Fangbehälterinnenraum (26) zurückgehalten werden.

7. Gewässervorrichtung (1) nach Anspruch 5 oder 6, **dadurch gekennzeichnet, dass** in oder an, insbesondere auf, dem Behälterkörper (20) zumindest temporär ein wasserdurchlässiges Deckelelement (28) zumindest temporär anordenbar ist, bevorzugt ist das Deckelelement (28) gitterartig ausgebildet.

8. Gewässervorrichtung (1) nach einem der vorhergehenden Ansprüche, **dadurch gekennzeichnet, dass** eine Ablauföffnung (5, 7) einer Ablaufeinrichtung (6, 8), insbesondere die zweite Ablauföffnung (7) der zweiten Ablaufeinrichtung (8), in einer oberen Hälfte, bevorzugt in einem oberen Drittel, besonders bevorzugt in einem oberen Viertel, höchst bevorzugt in einem oberen Sechstel, der Höhe (16) des tiefsten Punktes (15) der Aufnahmewanne (4) zu einem Randbereich der Aufnahmewanne (4) und/oder auf Höhe eines bestimmungsgemäßen Wasserpegels (17) des Aufnahmevolumens (3) angeordnet oder ausgebildet ist.

9. Gewässervorrichtung (1) nach einem der vorhergehenden Ansprüche, **dadurch gekennzeichnet, dass** eine Ablaufeinrichtung (6, 8), insbesondere die zweite Ablaufeinrichtung (8), ein, bevorzugt innerhalb des Aufnahmevolumens (3) angeordnetes oder ausgebildetes, Kupplungsmittel (35) zur lösbaren Befestigung eines ersten Ablaufeinrichtungsabschnitts (33) an einem weiteren Ablaufeinrichtungsabschnitt (34) umfasst.

10. Gewässervorrichtung (1) nach einem der Ansprüchen 2 bis 9, **dadurch gekennzeichnet, dass** zumindest abschnittsweise über einen gemeinsamen Ablaufleitungsabschnitt (36) Wasser aus dem Aufnahmevolumen (3) über die erste und die zweite Ablaufeinrichtung (6, 8) zu einem Auslassort (9) ableitbar ist, insbesondere ist der gemeinsame Ablaufleitungsabschnitt (36) stromab einer Schließeinrichtung (10), insbesondere stromab einer der ersten Ablaufeinrichtung (6) zugeordneten Schließeinrichtung (10), angeordnet oder ausgebildet.

11. Gewässervorrichtung (1) nach einem der vorhergehenden Ansprüche, **dadurch gekennzeichnet, dass** eine Ablauföffnung (5, 7) der Ablaufeinrichtung (6, 8), insbesondere die zweite Ablauföffnung (7) der zweiten Ablaufeinrichtung (8), durch ein wasserdurchlässiges Schutzmittel (37) derart verschlossen ist, dass Fremdstoff, insbesondere Blätter oder ähnliches, durch die Ablauföffnung (5, 7) nicht hindurchtreten können.

12. Gewässervorrichtung (1) nach einem der vorhergehenden Ansprüche, **dadurch gekennzeichnet, dass** die Schließeinrichtung (10), insbesondere eine der ersten Ablaufeinrichtung (6) zugeordnete Schließeinrichtung, (10) zwischen einem Auslassort (9) und der Ablauföffnung (5, 7), insbesondere zwischen dem Auslassort (9) und der ersten Ablauföffnung (5), angeordnet oder ausgebildet ist, bevorzugt ist ein Schließmittel (11) der Schließeinrichtung (10) in einem unterhalb einer Erdoberfläche (38) platzierten, insbesondere unterhalb einer Aufnahmewanne (4) platzierten, ablaufeinrichtungsseitigen Leitungsabschnitt angeordnet oder ausgebildet, wobei besonders bevorzugt das Schließmittel (11) vermittels eines Steuer- und/oder Regelungsmittels (39) zwischen einer Verschlussstellung und einer Freigabestellung verstellbar ist.

13. Gewässervorrichtung (1) nach einem der vorhergehenden Ansprüche, **gekennzeichnet durch** eine zumindest temporär Wasser aus einem Wannenaufnahmevolumenmontagebereich zu einem Ablassort (9) ableitende dritte Ablauföffnung (43) einer dritten Ablaufeinrichtung (44), wobei die dritte Ablauföffnung (43) in einem tieferen Höhenniveau als die erste und die zweite Ablauföffnung (6, 8) angeordnet oder ausgebildet ist, insbesondere wird die dritte Ablauföffnung (43) im Endmontagezustand durch einen Aufnahmewannenabschnitt überdeckt.

14. Gewässervorrichtung (1) nach einem der vorhergehenden Ansprüche, **dadurch gekennzeichnet, dass** die Aufnahmewanne (4) zumindest abschnittsweise, insbesondere vollflächig, einen schichtartigen Aufbau aufweist, wobei wenigstens eine erste Schicht (51) aus einem Gussasphalt gebildet ist, insbesondere weist der Gussasphalt einen thermoplastischen Materialbestandteil und/oder einen Anteil an Bitumen von 2 bis 40 Masse-%, bevorzugt von 3 bis 30 Masse-%, besonders bevorzugt von 4 bis 20 Masse-% auf.

15. Verfahren zum Betrieb einer Gewässervorrichtung (1) zur zumindest temporären Ansiedlung von Amphibien in einer Gewässervorrichtung (1) nach einem der vorhergehenden Ansprüche, **gekennzeichnet durch**
- Befüllen einer Aufnahmewanne (4) der Gewässervorrichtung (1) mit Wasser, insbesondere mit Frischwasser,
- Auslassen des Wassers aus der Aufnahmewanne (4) zu einem Auslassort (9) über eine mit einer Ablauföffnung (5, 7) ausgebildeten Ablaufeinrichtung (6, 8) vermittels eines zumindest temporären Freigebens einer Ablaufeinrichtung (6, 8) einer gewässervorrichtungsseitig durch verstellen eines Schließmittels (11) einer Schließeinrichtung (10) von einer Verschlussstellung in eine Freigabestellung.

## Claims

1. Aquatic facility for the colonization of amphibians, comprising
- a holding trough (4) configured for holding water and defining a holding volume (3) with at least one holding wall (2),
- a discharge device (6, 8) configured with a discharge aperture (5, 7), which discharge device is equipped to drain at least temporarily, in particular predominantly or completely, water located in the holding trough (4) to an outlet location (9) via the discharge aperture (5, 7),
- a closing device (10) associated with the discharge device (6), wherein the closing device (10) comprises at least one closing means (11) which is adjustable between a lock position locking the discharge device (6) and a release position releasing the discharge device and allowing the water located in the holding trough (4) to flow off at least partially, in particular completely, to the outlet location (9), wherein
- at least a first discharge device (6) having a first discharge aperture (5), and at least a second discharge device (8) having a second discharge aperture (7), wherein water is drainable, at least temporarily, from the holding trough (4) to at least one outlet location (9) via the discharge apertures (5, 7), and the first and the second discharge aperture (5, 7) are at a distance (14) from each other.

2. Aquatic facility (1) according to claim 1, **characterized in that** the distance (14) between the first and the second discharge aperture (5, 7) amounts to at least a quarter, preferably at least half, particularly preferably at least three quarters, of the maximum water height (16) from a lowest point (15) of the holding volume (3) and/or of the holding trough (4) to a reference value relating to the height of the holding trough (4), in particular to an intended water level (17) of the holding volume (3).

3. Aquatic facility (1) according to claim 1 or 2, **characterized in that** a first discharge device (6), in particular a first discharge device (6) in the form of a bottom drainage device, is equipped such that water located in the holding trough (4) is at least temporarily, in particular predominantly or completely, drainable to an outlet location (9) via said discharge device (6), wherein the outflow of the water via the first discharge device (6) is at least temporarily blockable via the closing device (10) associated with the first discharge device (6).

4. Aquatic facility (1) according to claim 2 or 3, **characterized in that** the first discharge aperture (5) of the first discharge device (6) is arranged or configured in a bottom third, preferably in a bottom quarter, of the maximum water height (16) from a lowest point (15) of the holding volume (3) to a reference value relating to the height of the holding trough (4), in particular to an intended water level (17) of the holding trough (4), wherein the first discharge aperture (5) of the first discharge device (6) is particularly preferably arranged or configured in a base region of the holding trough (4), most preferably at a lowest point (15) of the holding trough (4).

5. Aquatic facility (1) according to one of the preceding claims, **characterized in that** at least one discharge device (6, 8), in particular the first discharge device (6), comprises a container body (20) defining a container body interior (19) delimited by container walls (18), wherein in particular the container body (20) has, in the final assembled state, a first container aperture (21) oriented towards the holding volume (3) of the holding trough (4), and/or a second container aperture (22), through which water located in the container body interior (19) is drainable to an outlet location (9).

6. Aquatic facility (1) according to claim 5, **characterized in that** a trap container (24), in particular a sludge trap container, is arranged or arrangeable in or on at least a portion of the container body (20), wherein the trap container is equipped such that water located in a trap container interior (26) defined by trap container walls (25) is drainable to the outlet location (9), wherein trapped substances are retained in the trap container interior (26).

7. Aquatic facility (1) according to claim 5 or 6, **characterized in that,** at least temporarily, a water-permeable cover element (28) is at least temporarily arrangeable in or on, particularly on, the container body (20), wherein the cover element (28) preferably is configured in a lattice-like manner.

8. Aquatic facility (1) according to one of the preceding claims, **characterized in that** a discharge aperture (5, 7) of a discharge device (6, 8), in particular the second discharge aperture (7) of the second discharge device (8), is arranged or configured in an upper half, preferably in an upper third, particularly preferably in an upper quarter, most preferably in an upper sixth, of the height (16) from the lowest point (15) of the holding trough (4) to an edge region of the holding trough (4), and/or at the height of an intended water level (17) of the holding volume (3).

9. Aquatic facility (1) according to one of the preceding claims, **characterized in that** a discharge device (6, 8), in particular the second discharge device (8), comprises a coupling means (35), which is preferably arranged or configured within the holding volume (3), for the releasable fastening of a first discharge device portion (33) to a further discharge device portion (34).

10. Aquatic facility (1) according to one of claims 2 to 9, **characterized in that** water is drainable from the holding volume (3) to an outlet location (9) via the first and the second discharge device (6, 8), at least in part via a common discharge line portion (36), the common discharge line portion (36) being arranged or configured in particular downstream of a closing device (10), in particular downstream of a closing device (10) associated with the first discharge device (6).

11. Aquatic facility (1) according to one of the preceding claims, **characterized in that** a discharge aperture (5, 7) of the discharge device (6, 8), in particular the second discharge aperture (7) of the second discharge device (8), is closed off by a water-permeable protecting means (37) in such a way that foreign matter, in particular leaves or similar, cannot pass through the discharge aperture (5, 7).

12. Aquatic facility (1) according to one of the preceding claims, **characterized in that** the closing device (10), in particular a closing device (10) associated with the first discharge device (6), is arranged or configured between an outlet location (9) and the discharge aperture (5, 7), in particular between the outlet location (9) and the first discharge aperture (5), wherein a closing means (11) of the closing device (10) preferably is arranged or configured in a discharge-device-side line portion which is positioned below a ground surface (38), in particular positioned below a holding trough (4), wherein the closing means (11) is particularly preferably adjustable between a lock position and a release position by using an open-loop and/or closed-loop control means (39).

13. Aquatic facility (1) according to one of the preceding claims, **characterized by** a third discharge aperture (43) of a third discharge device (44) at least temporarily draining water from a trough holding volume assembly region to an outlet location (9), wherein the third discharge aperture (43) is arranged or configured at a lower height level than the first and the second discharge aperture (6, 8), wherein the third discharge aperture (43) is in particular covered by a holding trough portion in the final assembled state.

14. Aquatic facility (1) according to one of the preceding claims, **characterized in that** the holding trough (4) comprises a layered structure at least in part, in particular over the whole surface, wherein at least a first layer (51) is formed from a mastic asphalt, the mastic asphalt having in particular a thermoplastic material component and/or a proportion of bitumen of 2 to 40 wt.%, preferably of 3 to 30 wt.%, particularly preferably of 4 to 20 wt.%.

15. Method for operating an aquatic facility (1) for the at least temporary colonization of amphibians in an aquatic facility (1) according to one of the preceding claims, **characterized by**
- filling a holding trough (4) of the aquatic facility (1) with water, in particular with fresh water,
- letting out the water from the holding trough (4) to an outlet location (9) via a discharge device (6, 8) configured with a discharge aperture (5, 7) by way of at least temporarily releasing a discharge device (6, 8) of an aquatic-facility-side by adjusting a closing means (11) of a closing device (10) from a lock position to a release position.

## Revendications

1. Dispositif d'eau, destiné à la colonisation d'amphibiens, comprenant
- une cuve de réception (4) configurée pour recevoir de l'eau et définissant, avec au moins une paroi de réception (2), un volume de réception (3),
- un système d'écoulement (6, 8) réalisé avec une ouverture d'écoulement (5, 7), qui est configuré pour évacuer, par le biais de l'ouverture d'écoulement (5, 7), de l'eau se trouvant dans la cuve de réception (4) au moins temporairement, en particulier en majeure partie ou complètement, vers un lieu de décharge (9),
- un système de fermeture (10) associé au système d'écoulement (6), le système de fermeture (10) comprenant au moins un moyen de fermeture (11), qui peut être déplacé entre une position de fermeture fermant le système d'écoulement (6) et une position de déblocage débloquant le système d'écoulement et laissant s'écouler au moins en partie, en particulier complètement, l'eau se trouvant dans la cuve de réception (4) vers le lieu de décharge (9), dans lequel
- au moins un premier système d'écoulement (6) avec une première ouverture d'écoulement (5) et au moins un deuxième système d'écoulement (8) avec une deuxième ouverture d'écoulement (7), de l'eau pouvant être évacuée au moins temporairement de la cuve de réception (4) vers au moins un lieu de décharge (9) par le biais des ouvertures d'écoulement (5, 7) et la première et la deuxième ouverture d'écoulement (5, 7) présentant un écart (14) entre elles.

2. Dispositif d'eau (1) selon la revendication 1, **caractérisé en ce que** l'écart (14) entre la première et la deuxième ouverture d'écoulement (5, 7) correspond à au moins un quart, de préférence au moins la moitié, de manière particulièrement préférée au moins trois quarts de la hauteur d'eau maximale (16) d'un point le plus profond (15) du volume de réception (3) et/ou de la cuve de réception (4) à une valeur de référence relative à la hauteur de la cuve de réception (4), en particulier un niveau d'eau (17) conforme à l'usage du volume de réception (3).

3. Dispositif d'eau (1) selon la revendication 1 ou 2, **caractérisé en ce qu'**un premier système d'écoulement (6), en particulier un premier système d'écoulement (6) réalisé sous la forme d'un système de décharge par le fond, est configuré de telle manière que, par le biais de celui-ci, de l'eau se trouvant dans la cuve de réception (4) peut être évacuée au moins temporairement, en particulier en majeure partie ou complètement, vers un lieu de décharge (9), l'écoulement de l'eau par le biais du premier système d'écoulement (6) pouvant être bloqué au moins temporairement par le biais du système de fermeture (10) associé au premier système d'écoulement (6).

4. Dispositif d'eau (1) selon la revendication 2 ou 3, **caractérisé en ce que** la première ouverture d'écoulement (5) du premier système d'écoulement (6) est disposée ou réalisée dans un tiers inférieur, de préférence dans un quart inférieur, de la hauteur d'eau maximale (16) d'un point le plus profond (15) du volume de réception (3) à une valeur de référence relative à la hauteur de la cuve de réception (4), en particulier un niveau d'eau (17) conforme à l'usage de la cuve de réception (4), la première ouverture d'écoulement (5) du premier système d'écoulement (6) étant, de manière particulièrement préférée, disposée ou réalisée dans une zone de fond de la cuve de réception (4), de manière tout particulièrement préférée à un point le plus profond (15) de la cuve de réception (4).

5. Dispositif d'eau (1) selon l'une des revendications précédentes, **caractérisé en ce qu'**au moins un système d'écoulement (6, 8), en particulier le premier système d'écoulement (6), comprend un corps de contenant (20) définissant un espace intérieur de corps de contenant (19) limitant par des parois de contenant (18), le corps de contenant (20) présentant en particulier, dans l'état d'assemblage définitif, une première ouverture de contenant (21) orientée vers le volume de réception (3) de la cuve de réception (4) et/ou présentant une deuxième ouverture de contenant (22), par laquelle de l'eau se trouvant dans l'espace intérieur de corps de contenant (19) peut être évacuée vers un lieu de décharge (9).

6. Dispositif d'eau (1) selon la revendication 5, **caractérisé en ce qu'**un contenant de retenue (24), en particulier un contenant de retenue de boue, est ou peut être disposé au moins sur certaines parties dans ou sur le corps de contenant (20), ledit contenant de retenue étant configuré de telle manière que de l'eau se trouvant dans un espace intérieur de contenant de retenue (26) défini par des parois de contenant de retenue (25) peut être évacuée vers le lieu de décharge (9), des substances retenues étant gardées dans l'espace intérieur de contenant de retenue (26).

7. Dispositif d'eau (1) selon la revendication 5 ou 6, **caractérisé en ce qu'**un élément formant couvercle (28) perméable à l'eau peut être disposé au moins temporairement dans ou contre, en particulier sur, le corps de contenant (20), l'élément formant couvercle (28) étant de préférence réalisé en forme de grille.

8. Dispositif d'eau (1) selon l'une des revendications précédentes, **caractérisé en ce qu'**une ouverture d'écoulement (5, 7) d'un système d'écoulement (6, 8), en particulier la deuxième ouverture d'écoulement (7) du deuxième système d'écoulement (8) est disposée ou réalisée dans une moitié supérieure, de préférence dans un tiers supérieur, de manière particulièrement préférée dans un quart supérieur, de manière tout particulièrement préférée dans un sixième supérieur, de la hauteur (16) du point le plus profond (15) de la cuve de réception (4) à une zone de bordure de la cuve de réception (4) et/ou à la hauteur d'un niveau d'eau (17) conforme à l'usage du volume de réception (3).

9. Dispositif d'eau (1) selon l'une des revendications précédentes, **caractérisé en ce qu'**un système d'écoulement (6, 8), en particulier le deuxième système d'écoulement (8), comprend un moyen d'accouplement (35), de préférence disposé ou réalisé à l'intérieur du volume de réception (3), pour la fixation libérable d'une première partie de système d'écoulement (33) à une autre partie de système d'écoulement (34).

10. Dispositif d'eau (1) selon l'une des revendications 2 à 9, **caractérisé en ce que** de l'eau peut être évacuée du volume de réception (3) vers un lieu de décharge (9) par le biais du premier et du deuxième système d'écoulement (6, 8) au moins sur certaines parties par le biais d'une partie de conduite d'écoulement commune (36), la partie de conduite d'écoulement commune (36) étant en particulier disposée ou réalisée en aval d'un système de fermeture (10), en particulier en aval d'un système de fermeture (10) associé au premier système d'écoulement (6).

11. Dispositif d'eau (1) selon l'une des revendications précédentes, **caractérisé en ce qu'**une ouverture d'écoulement (5, 7) du système d'écoulement (6, 8), en particulier la deuxième ouverture d'écoulement (7) du deuxième système d'écoulement (8), est fermée par un moyen de protection (37) perméable à l'eau de telle manière que des substances étrangères, en particulier des feuilles ou similaires, ne peuvent pas passer par l'ouverture d'écoulement (5, 7).

12. Dispositif d'eau (1) selon l'une des revendications précédentes, **caractérisé en ce que** le système de fermeture (10), en particulier un système de fermeture (10) associé au premier système d'écoulement (6), est disposé ou réalisé entre un lieu de décharge (9) et l'ouverture d'écoulement (5, 7), en particulier entre le lieu de décharge (9) et la première ouverture d'écoulement (5), un moyen de fermeture (11) du système de fermeture (10) étant de préférence disposé ou réalisé dans une partie de conduite, côté système d'écoulement, placée sous une surface terrestre (38), en particulier placée sous une cuve de réception (4), le moyen de fermeture (11) pouvant de manière particulièrement préférée être déplacé à l'aide d'un moyen de commande et/ou de régulation (39) entre une position de fermeture et une position de déblocage.

13. Dispositif d'eau (1) selon l'une des revendications précédentes, **caractérisé par** une troisième ouverture d'écoulement (43) d'un troisième système d'écoulement (44), évacuant au moins temporairement de l'eau d'une zone de montage de volume de réception de cuve vers un lieu de décharge (9), la troisième ouverture d'écoulement (43) étant disposée ou réalisée à un niveau de hauteur plus bas que la première et la deuxième ouverture d'écoulement (6, 8), la troisième ouverture d'écoulement (43) étant en particulier recouverte par une partie de cuve de réception dans l'état d'assemblage définitif.

14. Dispositif d'eau (1) selon l'une des revendications précédentes, **caractérisé en ce que** la cuve de réception (4) présente au moins sur certaines parties, en particulier sur toute la surface, une structure en forme de couches, au moins une première couche (51) étant formée en asphalte coulé, l'asphalte coulé présentant en particulier un composant de matériau thermoplastique et/ou une teneur en bitume de 2 à 40 %mas, de préférence de 3 à 30 %mas, de manière particulièrement préférée de 4 à 20 %mas.

15. Procédé de fonctionnement d'un dispositif d'eau (1), destiné à la colonisation au moins temporaire d'amphibiens dans un dispositif d'eau (1) selon l'une des revendications précédentes, **caractérisé par**
- le remplissage d'une cuve de réception (4) du dispositif d'eau (1) avec de l'eau, en particulier de l'eau propre,
- la décharge de l'eau de la cuve de réception (4) vers un lieu de décharge (9) par le biais d'un système d'écoulement (6, 8) réalisé avec une ouverture d'écoulement (5, 7) au moyen d'un déblocage au moins temporaire d'un système d'écoulement (6, 8), côté dispositif d'eau, par le déplacement d'un moyen de fermeture (11) d'un système de fermeture (10) d'une position de fermeture à une position de déblocage.
